# EUROPEAN PATENT APPLICATION

(11) **EP 4 852 561 A1**
(43) Date of publication of application: **09.12.2026**
(21) Application number: 24922372.8
(22) Date of filing: 30.01.2024
(51) Int. Cl.: H04W 72/0446, H04W 52/02

(54) **DEVICE AND COMMUNICATION METHOD**

(71) Applicant: NTT DOCOMO, INC., Tokyo 100-6150 (JP)
(72) Inventor: OKANO, Mayuko, Tokyo 100-6150 (JP); YOSHIOKA, Shohei, Tokyo 100-6150 (JP); KUMAGAI, Shinya, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2024/002856
(87) International publication number: WO 2025/163739

(57) **Abstract**

This device, which has a lower complexity than a narrow band Internet of things (NB-IoT) device, comprises: a communication unit that receives a first signal; and a control unit that determines a second timing or a second period during which a second signal is received by the communication unit on the basis of a first timing or a first period during which the first signal is received.

## Description

### Technical Field

The present disclosure relates to a device and a communication method.

### Background Art

In New Radio (NR) (also referred to as "5G") that is a successor system of Long Term Evolution (LTE), a technology that satisfies a large-capacity system, a high data transmission speed, low latency, simultaneous connection of a large number of terminals, low cost, low power consumption, and the like as a requirement condition has been discussed (for example, see Non-Patent Literature (hereinafter, referred to as "NPL") 1).

Further, in Release 18 (Rel-18) of 3GPP (registered trademark), Ambient Internet of Things (A-IoT) has been studied (for example, see NPL 2). In A-IoT, the target is a device having an extremely simple configuration for a low-end IoT application that operates with extremely low power consumption.

### Citation List

### Non-Patent Literature

NPL 1
   3GPP TS 38.300 V17.3.0 (2022-12)
NPL 2
   "Revised SID on Ambient IoT", RP-232404, 3GPP TSG RAN Meeting #101, September 2023
NPL 3
   3GPP TR 38.848 V1.0.0 (2023-09)
NPL 4
   3GPP TS 36.211 V16.8.0 (2023-09)
NPL 5
   "Study on solutions for Ambient IoT (Internet of Things) in NR", RP-234058, 3GPP TSG RAN Meeting #102, December 2023

### Summary of Invention

There is room for study on the timing of communication in a communication system including an ambient IoT device. In a case where the ambient IoT device cannot appropriately determine the communication timing, it may not be possible to appropriately transmit and receive information or signals, and the system performance may be degraded. Accordingly, it is desirable to determine a communication timing suitable for the above communication system, whereby information or signals are appropriately communicated.

An aspect of the present disclosure provides a device and a communication method each capable of performing communication at an appropriate timing in a communication system including an ambient IoT device.

A device according to an aspect of the present disclosure is a device having a lower complexity than a narrow band-internet of things (NB-IoT) device, and the device includes: a communication section that receives a first signal; and a control section that determines, based on a first timing or a first period at which the first signal is received, a second timing or a second period at which a second signal is received by the communication section.

### Brief Description of Drawings

[FIG. 1] FIG. 1 is a diagram illustrating an example of a radio communication system according to an embodiment of the present disclosure.
[FIG. 2] FIG. 2 is a diagram for describing Topology 1.
[FIG. 3] FIG. 3 is a diagram for describing Topology 2.
[FIG. 4] FIG. 4 is a diagram for describing Topology 3 with DL assistance.
[FIG. 5] FIG. 5 is a diagram for describing Topology 3 with UL assistance.
[FIG. 6] FIG. 6 is a diagram for describing Topology 4.
[FIG. 7] FIG. 7 is a diagram for describing backscattering transmission.
[FIG. 8] FIG. 8 is a diagram illustrating a communication flow of DT in Topology 1.
[FIG. 9] FIG. 9 is a diagram illustrating a communication flow of DO-DTT in Topology 1.
[FIG. 10] FIG. 10 is a diagram illustrating a communication flow of DT in Topology 2.
[FIG. 11] FIG. 11 is a diagram illustrating a communication flow of DO-DTT in Topology 2.
[FIG. 12] FIG. 12 is a diagram illustrating an example of an exchange between a base station and A-IoT UE according to the embodiment of the present disclosure.
[FIG. 13] FIG. 13 is a diagram illustrating another example of the exchange between the base station and the A-IoT UE according to the embodiment of the present disclosure.
[FIG. 14] FIG. 14 is a diagram illustrating still another example of the exchange between the base station and the A-IoT UE according to the embodiment of the present disclosure.
[FIG. 15] FIG. 15 is a diagram illustrating still another example of the exchange between the base station and the A-IoT UE according to the embodiment of the present disclosure.
[FIG. 16] FIG. 16 is a diagram illustrating still another example of the exchange between the base station and the A-IoT UE according to the embodiment of the present disclosure.
[FIG. 17] FIG. 17 is a diagram illustrating still another example of the exchange between the base station and the A-IoT UE according to the embodiment of the present disclosure.
[FIG. 18] FIG. 18 is a diagram illustrating still another example of the exchange between the base station and the A-IoT UE according to the embodiment of the present disclosure.
[FIG. 19] FIG. 19 is a diagram illustrating still another example of the exchange between the base station and the A-IoT UE according to the embodiment of the present disclosure.
[FIG. 20] FIG. 20 is a diagram illustrating still another example of the exchange between the base station and the A-IoT UE according to the embodiment of the present disclosure.
[FIG. 21] FIG. 21 is a diagram illustrating still another example of the exchange between the base station and the A-IoT UE according to the embodiment of the present disclosure.
[FIG. 22] FIG. 22 is a diagram illustrating still another example of the exchange between the base station and the A-IoT UE according to the embodiment of the present disclosure.
[FIG. 23] FIG. 23 is a diagram illustrating still another example of the exchange between the base station and the A-IoT UE according to the embodiment of the present disclosure.
[FIG. 24] FIG. 24 is a diagram illustrating still another example of the exchange between the base station and the A-IoT UE according to the embodiment of the present disclosure.
[FIG. 25] FIG. 25 is a diagram illustrating still another example of the exchange between the base station and the A-IoT UE according to the embodiment of the present disclosure.
[FIG. 26] FIG. 26 is a diagram illustrating still another example of the exchange between the base station and the A-IoT UE according to the embodiment of the present disclosure.
[FIG. 27] FIG. 27 is a diagram illustrating still another example of the exchange between the base station and the A-IoT UE according to the embodiment of the present disclosure.
[FIG. 28] FIG. 28 is a diagram illustrating still another example of the exchange between the base station and the A-IoT UE according to the embodiment of the present disclosure.
[FIG. 29] FIG. 29 is a diagram illustrating still another example of the exchange between the base station and the A-IoT UE according to the embodiment of the present disclosure.
[FIG. 30] FIG. 30 is a diagram illustrating still another example of the exchange between the base station and the A-IoT UE according to the embodiment of the present disclosure.
[FIG. 31] FIG. 31 is a diagram illustrating still another example of the exchange between the base station and the A-IoT UE according to the embodiment of the present disclosure.
[FIG. 32] FIG. 32 is a diagram illustrating still another example of the exchange between the base station and the A-IoT UE according to the embodiment of the present disclosure.
[FIG. 33] FIG. 33 is a diagram describing an operation example of a device according to the embodiment of the present disclosure.
[FIG. 34] FIG. 34 is a diagram describing another operation example of the device according to the embodiment of the present disclosure.
[FIG. 35] FIG. 35 is a block diagram illustrating an example of a configuration of a base station according to the embodiment of the present disclosure.
[FIG. 36] FIG. 36 is a block diagram illustrating an example of a configuration of the device according to the embodiment of the present disclosure.
[FIG. 37] FIG. 37 is a diagram illustrating an example of a hardware configuration of the base station and the device according to the embodiment of the present disclosure.
[FIG. 38] FIG. 38 is a diagram illustrating an example of a configuration of a vehicle according to the embodiment of the present disclosure.

### Description of Embodiments

Hereinafter, an embodiment according to an aspect of the present disclosure will be described in detail with reference to the accompanying drawings. Note that the embodiment to be described below is merely an example, and an embodiment to which the present disclosure is applied is not limited to the embodiment below.

Existing techniques are used as appropriate for operations of a radio communication system according to an embodiment of the present disclosure. The existing techniques include, for example, existing LTE or NR, but are not limited to existing LTE or NR. Further, the term "LTE" used in this specification has a broad meaning including LTE-Advanced and a system after LTE-Advanced, unless otherwise specified.

Terms used in existing LTE, such as a synchronization signal (SS), a primary SS (PSS), a secondary SS (SSS), a physical broadcast channel (PBCH), a physical random access channel (PRACH), a physical downlink control channel (PDCCH), a physical downlink shared channel (PDSCH), a physical uplink control channel (PUCCH), and a physical uplink shared channel (PUSCH), are used in an embodiment of the present disclosure described below. This is for the sake of convenience in description, and the same signals, functions, and the like may be called by other names. Further, the above terms in NR correspond to NR-SS, NR-PSS, NR-SSS, NR-PBCH, NR-PRACH, and the like. Note that, even though the signal is used in NR, it is not necessarily explicitly referred to as "NR-".

Further, in an embodiment of the present disclosure, a duplex system may be a Time Division Duplex (TDD) system, a Frequency Division Duplex (FDD) system, or another system (e.g., Flexible Duplex or the like).

Furthermore, in an embodiment of the present disclosure, the term "configured" with respect to a radio parameter or the like may refer to a predetermined value being pre-configured, or it may refer to a radio parameter indicated from a base station, a device, a terminal, or the like being configured.

### (Embodiment)

### <Radio Communication System>

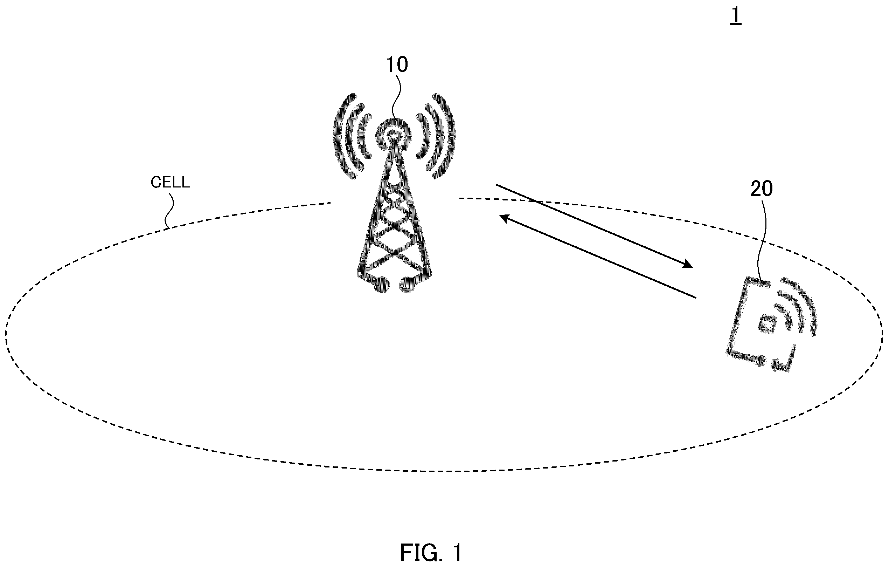

FIG. 1 is a diagram illustrating an example of a radio communication system according to the embodiment of the present disclosure. As illustrated in FIG. 1, radio communication system 1 includes base station 10 and device 20. FIG. 1 illustrates one base station 10 and one device 20, but this is an example, and a plurality of base stations and devices may be present. The base station is also referred to as a BS, a gNB, or the like. Device 20 may be regarded as a form of a terminal (user equipment (UE)) and may be an ambient IoT device that has a lower complexity than a narrow band-internet of things (NB-IoT) device. The ambient IoT device may be referred to as an ambient IoT terminal, an ambient IoT UE, or the like.

Base station 10 is a communication apparatus that provides one or more cells and performs radio communication with device 20. Physical resources of the radio signal are defined in a time domain and a frequency domain. The time domain may be defined by the number of orthogonal frequency division multiplexing (OFDM) symbols. The frequency domain may be defined by the number of subcarriers or the number of resource blocks.

Base station 10 transmits downlink (DL) signals such as control information, configuration information, and data to device 20 in DL. Base station 10 receives uplink (UL) signals such as control information, information on the processing capability of device 20 (device capability (information) or A-IoT capability (information); for example, capability, device capability, A-IoT capability, A-IoT device capability, and the like), and data from device 20 in UL.

Channels used for transmission of DL signals include, for example, a data channel and a control channel. For example, the data channel may include a physical downlink shared channel (PDSCH), and the control channel may include a physical downlink control channel (PDCCH). For example, base station 10 transmits control information to device 20 using the PDCCH and transmits a DL data signal to device 20 using the PDSCH. Note that the PDSCH is an example of a downlink shared channel or a data channel, and the PDCCH is an example of a downlink control channel. The PDCCH may be read as downlink control information (DCI), control information, or the like transmitted in the PDCCH.

As will be described later, the radio communication system may include an intermediate node, an assisting node, and/or a terminal (UE) (see <Device Type and Topology> below). Note that, in the following, "and/or" may be simply referred to as "/" in some cases.

Device 20 is a communication apparatus equipped with a radio communication function and may be an ambient IoT device (for example, a sensor) as described above. In the following, the ambient IoT device is also referred to as an A-IoT UE.

Device 20 receives a DL signal such as a control signal, configuration information, data, and the like from base station 10 in DL and transmits a UL signal such as a control signal, capability information of device 20, data, and the like to base station 10 in UL.

Channels used for transmission of UL signals include, for example, a data channel and a control channel. For example, the data channel may include a physical uplink shared channel (PUSCH), and the control channel may include a physical uplink control channel (PUCCH). For example, device 20 transmits control information using the PUCCH and transmits a UL data signal using the PUSCH. Note that the PUSCH is an example of an uplink shared channel or a data channel, and the PUCCH is an example of an uplink control channel. The PUSCH or the PUCCH may be read as uplink control information (UCI), control information, or the like transmitted in the PUSCH or the PUCCH.

### <Ambient IoT>

In Rel-18, studies on ambient IoT that is even lower end than existing NB-IoT (see, for example, section 10 of NPL 4) have been approved (see, for example, NPL 2). In ambient IoT, an ultra-low complexity device with ultra-low power consumption is targeted.

In ambient IoT, for example, the following introduction scenarios and characteristics may be studied for related use cases.
- Indoor or outdoor environment
- Base station type, for example, macro/micro/pico cell-based deployment
- Topology related to connectivity, for example, which node among a base station, a terminal (UE), a relay, a repeater, and the like communicates with the A-IoT device
- Whether a duplex system is TDD or FDD, and whether a frequency band is a licensed band or an unlicensed band
- Coexistence with UE and network equipment in frequency band for the existing 3GPP technology
- Assumption of traffic of outgoing call from device and incoming call to device

Based on the above introduction scenarios and characteristics, for example, the following RAN design targets may be established.
- Power consumption
- Complexity
- Coverage
- Data rate
- Positioning accuracy

Based on the introduction scenarios suitable for the related use case, the feasibility of satisfying the design target is compared and evaluated, and a function to be supported is specified.

### <Device Type and Topology>

Based on the results of the study items, TR 38.848 (NPL 3) has been approved. In TR 38.848, ambient IoT devices of the following categories are studied.

Device A: Device A has no power storage (energy storage), has no function of independent signal generation and signal amplification, and performs backscattering transmission.

Device B: Device B has power storage, has no function of independent signal generation, and performs backscattering transmission. Device B amplifies a reflected signal using stored power.

Device C: Device C has power storage, has an independent signal generation function, and has an active radio frequency (RF) component for transmission.

Note that the complexity of Device A is assumed to be on the order of radio frequency identification (RFID).

In TR 38.848, the following Topologies 1 to 4 are defined in an ambient IoT network.

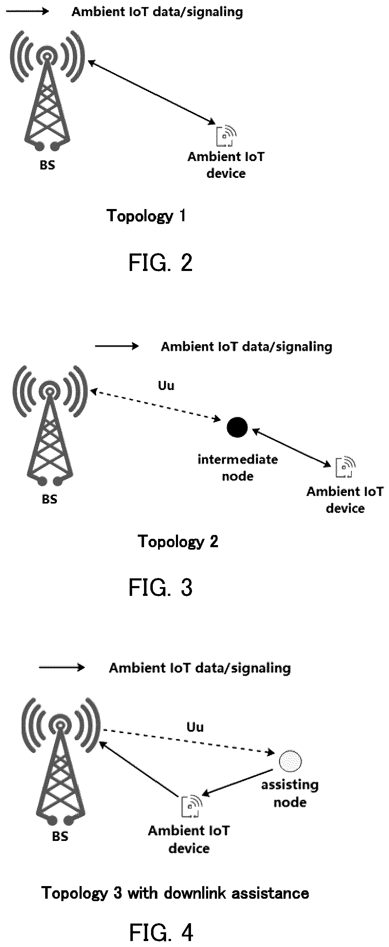

FIG. 2 is a diagram illustrating Topology 1. As illustrated in FIG. 2, Topology 1 is a configuration in which a base station (BS) and an ambient IoT device communicate with each other. The ambient IoT device directly executes bidirectional communication with the base station.

FIG. 3 is a diagram illustrating Topology 2. As illustrated in FIG. 3, Topology 2 is a configuration in which a base station and an ambient IoT device communicate with each other via an intermediate node. The ambient IoT device executes bidirectional communication with the intermediate node disposed between the base station and the ambient IoT device. The intermediate node may be, for example, a relay, an integrated access and backhaul (IAB) node, UE, a repeater, or the like.

FIG. 4 is a diagram illustrating Topology 3 with DL assistance. As illustrated in FIG. 4, Topology 3 is a configuration including communication between a base station and an assisting node, communication between the assisting node and an ambient IoT device, and communication between the ambient IoT device and the base station.

The assisting node assists in DL communication. For example, as illustrated in FIG. 4, the assisting node receives a DL signal from the base station and transmits the received DL signal to the ambient IoT device. As for UL communication, the ambient IoT device directly transmits a UL signal to the base station.

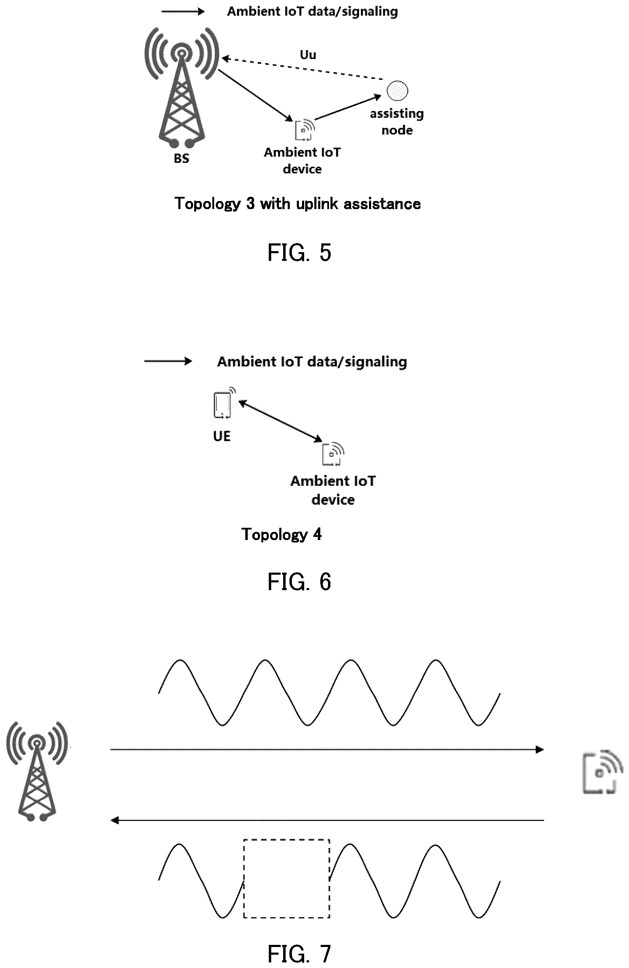

FIG. 5 is a diagram illustrating Topology 3 with UL assistance. As illustrated in FIG. 5, Topology 3 is a configuration including communication between a base station and an assisting node, communication between the assisting node and an ambient IoT device, and communication between the ambient IoT device and the base station.

The assisting node assists in UL communication. For example, as illustrated in FIG. 5, the assisting node receives a UL signal from the ambient IoT device and transmits the received UL signal to the base station. As for DL communication, the ambient IoT device directly receives a DL signal from the base station.

The assisting node illustrated in FIGS. 4 and 5 may be, for example, a relay, an IAB node, UE, a repeater, or the like.

FIG. 6 is a diagram illustrating Topology 4. Topology 4 is a configuration in which UE and an ambient IoT device communicate with each other. The ambient IoT device executes bidirectional communication with the UE. The communication according to Topology 4 may be regarded as sidelink (SL) communication.

In Topologies 1 to 4 described above, the ambient IoT device may be provided with a carrier wave from another node inside or outside the topology (see section 4.2.1 of NPL 3).

The radio communication system 1 (radio communication network) may include a base station, an assisting node, an intermediate node, and/or a terminal (UE in Topology 4) in addition to device 20. In the present specification, the base station, the assisting node, the intermediate node, and the terminal may be replaced with a network or a (network) node. Further, the A-IoT device may be simply referred to as A-IoT.

### <Backscattering Transmission>

The base station, the intermediate node, the assisting node, and another node transmit an RF signal to the ambient IoT device. The ambient IoT device is activated and obtains power from an RF operating field from the base station, the intermediate node, the assisting node, and another node via inductive coupling.

The ambient IoT device modulates, in a backscattering manner, the RF signal received from the base station, the intermediate node, the assisting node, and another node by switching a reflection coefficient of an antenna of its own device, and transmits information to the base station, the intermediate node, the assisting node, and another node.

FIG. 7 is a diagram illustrating backscattering transmission. FIG. 7 illustrates an example in which the ambient IoT device performs ON-OFF keying to transmit information. A region surrounded by a broken line illustrated in FIG. 7 indicates an OFF interval and may correspond to "0" of the information (bit). A signal of a sine wave may correspond to "1" of the information.

### <Rel-19 SID>

In Rel-19 Study Item Description (SID), a solution that is necessary and feasible for A-IoT has been studied (see section 4.1 of NPL 5). The studied solution includes, for example, determinations of which functions, procedures, and the like are necessary and which functions, procedures, and the like are not necessary.

In addition, several items are discussed under the leadership of RAN 1 for DL and UL of A-IoT. One of the items to be discussed is the scheduling and timing relationship for DL and UL in A-IoT. In the discussion of scheduling and timing relationship, the following 1. Traffic Flow, 2. Device Assumption, and 3. Topology can be studied.

### 1. Traffic Flow

The following DT and DO-DTT are studied as traffic flows of A-IoT.

### - Device Terminated (DT)

As traffic, there is transmission (DL) to the A-IoT UE, and there is no transmission (UL) from the A-IoT UE. In other words, there is information to be transmitted to the A-IoT UE, and there is no information to be transmitted from the A-IoT UE. DT corresponds to, for example, a command type in which an instruction such as an order or a command to the A-IoT UE is present.

### - Device Originated-Device Terminated Triggered (DO-DTT)

As traffic, there is a trigger from a network (NW), and there is transmission (UL) from the A-IoT UE. In other words, as traffic, there is information to be transmitted from the A-IoT UE. DO-DTT corresponds to, for example, a sensor information report type in which the A-IoT UE transmits the sensor information collected.

In the present disclosure, the transmission of information corresponds to the transmission of a signal including information or the transmission of a signal. In addition, in the present disclosure, the transmission to a certain device X corresponds to the transmission of a signal (or information) to device X. In addition, the transmission from a certain device X and the transmission of a certain device X correspond to the transmission of a signal (or information) by device X. In addition, the reception from a certain device X corresponds to the reception of a signal (or information) transmitted by device X. In addition, the reception of a certain device X corresponds to the reception of a signal (or information) by device X.

### 2. Device Assumption

In the A-IoT UE, the following TX (transmission) and frequency range (FR) 1-FDD are assumed.

### - TX

TX is UL transmission of backscattering without an amplifier (amplification) or a general UL transmission with an amplifier. Alternatively, UL transmission of backscattering with an amplifier may be executed.

### - FR1-FDD

FR1-FDD is applied to the A-IoT UE. That is, the A-IoT UE can switch the carrier frequency between the DL carrier and the UL carrier. Note that the present disclosure is not limited to FR1-FDD, and may be applied to TDD or may be applied to FR2 or FR3.

Note that the frequency band of each FR is, for example, as follows.
- FR1: 410 MHz to 7.125 GHz
- FR2: 24.25 GHz to 52.6 GHz
- FR3: 7.125 GHz to 24.25 GHz

In FR1, a sub-carrier spacing (SCS) of 15 kHz, 30 kHz, or 60 kHz is used, and a bandwidth (BW) of 5 to 100 MHz may be used. FR2 is a higher frequency than FR1, and uses an SCS of 60 kHz or 120 kHz (240 kHz may be included), and may use a bandwidth (BW) of 50 to 400 MHz.

### 3. Topology

Among the topologies illustrated in FIGS. 2 to 6, Topology 1 and Topology 2 are focused on.

In Topology 1, UL and/or DL communication is performed between the base station and the A-IoT UE without passing through an intermediate node. Note that the base station in the case of Topology 1 may support a microcell.

In Topology 2, communication is performed between the base station and the A-IoT UE via an intermediate node. The A-IoT UE performs bidirectional communication with the intermediate node disposed between the base station and the A-IoT UE. Note that the base station in the case of Topology 2 may support a macrocell. Further, the case of Topology 2 may be applied to an indoor case. Hereinafter, the intermediate node is also referred to as an intermediate UE, an int. UE, or the like.

### <Communication Flow>

The signal design for the A-IoT UE may be designed to be common between Topology 1 and Topology 2. Since the signal design for the A-IoT UE is common, the communication flows of DT and DO-DTT in Topology 1 and Topology 2 can be studied. The following four communication flows may be assumed as the communication flows of DT and DO-DTT in Topology 1 and Topology 2.

Note that, as described in the following four communication flows 1. to 4., the A-IoT UE is woken up in Step 1 and receives information (or a signal) in Step 2. Further, as described in the following communication flows 2. and 4., the A-IoT UE transmits a signal (or information) in Step 3.

### 1. Communication Flow of DT in Topology 1

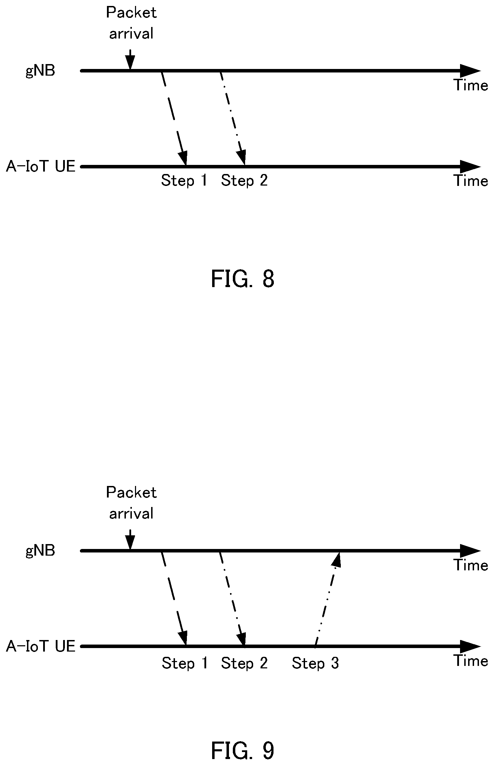

FIG. 8 is a diagram illustrating a communication flow of DT in Topology 1. FIG. 8 illustrates a flow of signals between the base station and the A-IoT UE. Note that, since the communication flow illustrated in FIG. 8 is a communication flow of DT, there is information transmission from the base station to the A-IoT UE, but there is no information transmission from the A-IoT UE to the base station.

In the communication flow of DT in Topology 1, the following two steps are assumed. Note that Step 1 is started, for example, in a case where a packet is generated in a higher layer such as an application layer of the base station (corresponding to "Packet arrival" indicated in FIG. 8).
- Step 1: The A-IoT UE is woken up by a signal such as a carrier waveform transmitted from the base station. The signal transmitted from the base station may correspond to an energy source that supplies energy to the A-IoT UE. The carrier waveform may be replaced with a carrier wave.
- Step 2: The A-IoT UE receives information from the base station.

Note that the A-IoT UE may be woken up by a signal (for example, a radio frequency (RF) signal) transmitted from a source other than the base station. Here, the signal transmitted from a source other than the base station may correspond to an energy source that supplies energy to the A-IoT UE.

### 2. Communication Flow of DO-DTT in Topology 1

FIG. 9 is a diagram illustrating a communication flow of DO-DTT in Topology 1. FIG. 9 illustrates a flow of signals between the base station and the A-IoT UE. Note that, since the communication flow illustrated in FIG. 9 is a communication flow of DO-DTT, there are information transmission from the base station to the A-IoT UE and information transmission from the A-IoT UE to the base station.

In the communication flow of DO-DTT in Topology 1, the following three steps are assumed. Note that Step 1 is started, for example, in a case where a packet is generated in a higher layer such as an application layer of the base station (corresponding to "Packet arrival" indicated in FIG. 9).
- Step 1: The A-IoT UE is woken up by a signal such as a carrier waveform transmitted from the base station.
- Step 2: The A-IoT UE receives information from the base station.
- Step 3: The A-IoT UE transmits a signal to the base station.

### 3. Communication Flow of DT in Topology 2

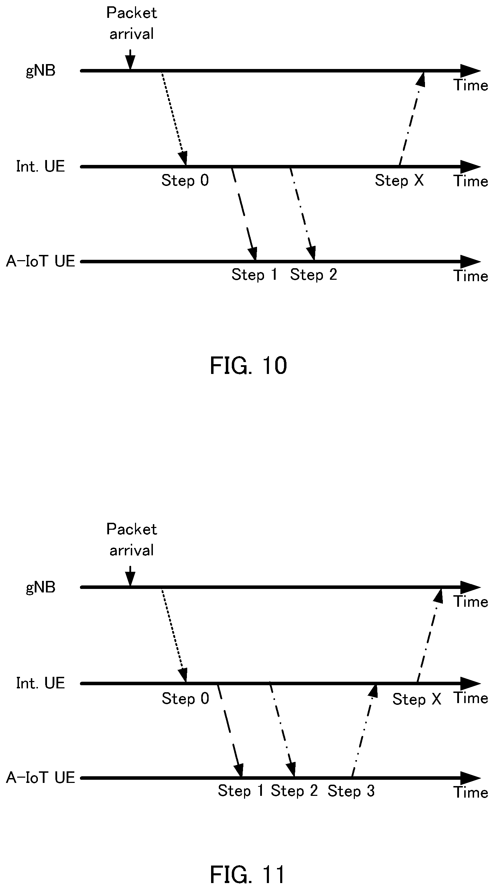

FIG. 10 is a diagram illustrating a communication flow of DT in Topology 2. FIG. 10 illustrates a flow of signals between the base station, the int. UE, and the A-IoT UE. Note that, since the communication flow illustrated in FIG. 10 is a communication flow of DT, there is information transmission to the A-IoT UE, but there is no information transmission from the A-IoT UE.

In the communication flow of DT in Topology 2, the following four steps are assumed. Note that Step 0 is started, for example, in a case where a packet is generated in a higher layer such as an application layer of the base station (corresponding to "Packet arrival" indicated in FIG. 10).
- Step 0: The int. UE receives a trigger for transmitting a signal such as a carrier waveform to the A-IoT UE from the base station, and transmits the signal to the A-IoT UE based on the trigger.
- Step 1: The A-IoT UE is woken up by the signal such as a carrier waveform transmitted from the int. UE.
- Step 2: The A-IoT UE receives information from the int. UE.
- Step X: The int. UE transmits a signal to the base station.

### 4. Communication Flow of DO-DTT in Topology 2

FIG. 11 is a diagram illustrating a communication flow of DO-DTT in Topology 2. FIG. 11 illustrates a flow of signals between the base station, the int. UE, and the A-IoT UE. Note that, since the communication flow illustrated in FIG. 11 is a communication flow of DO-DTT, there are information transmission to the A-IoT UE and information transmission from the A-IoT UE.

In the communication flow of DO-DTT in Topology 2, the following five steps of communication flow are assumed. Note that Step 0 is started, for example, in a case where a packet is generated in a higher layer such as an application layer of the base station (corresponding to "Packet arrival" indicated in FIG. 11).
- Step 0: The int. UE receives a trigger for transmitting a signal such as a carrier waveform to the A-IoT UE from the base station, and transmits the signal to the A-IoT UE based on the trigger.
- Step 1: The A-IoT UE is woken up by the signal such as a carrier waveform transmitted from the int. UE.
- Step 2: The A-IoT UE receives information from the int. UE.
- Step 3: The A-IoT UE transmits a signal to the int. UE.
- Step X: The int. UE transmits the signal to the base station.

In addition, in the four communication flows of 1. to 4. described above, Step 2 and Step 3 may be divided into two steps (in other words, may have two substeps).

For example, in the communication flow of DT in Topology 1/2, Step 2 may have the following two substeps (Step 2A and Step 2B).

Step 2A: The A-IoT UE receives information A (for example, control information or a signal) from the base station/int. UE.

Step 2B: The A-IoT UE receives information B (for example, data information or a signal) from the base station/int. UE.

In addition, for example, in the communication flow of DO-DTT in Topology 1/2, Step 3 may have the following two substeps (Step 3A and Step 3B).

Step 3A: The A-IoT UE transmits signal A (for example, control information or a signal) to the base station/int. UE.

Step 3B: The A-IoT UE transmits signal B (for example, data information or a signal) to the base station/int. UE.

### <Analysis>

In A-IoT, the communication flows including DT and DO-DTT as described above have been studied, but there is room for study on the transmission timing and/or the reception timing in the communication flows.

For example, in a case where the reception timing is not appropriate, the A-IoT UE may not be able to acquire appropriate information from the network such as the base station, and in a case where the transmission timing is not appropriate, the A-IoT UE may not be able to transmit information to the network appropriately, and may not be able to perform a proper operation. The same problems also occur for the base station and the int. UE. In addition, since the A-IoT UE is assumed to be a device having an extremely simple configuration for low-end IoT applications that operate with extremely low power consumption, there is a possibility that the A-IoT UE does not have a time synchronization function. In this case as well, there may be a problem as to at what timing the A-IoT UE executes transmission and/or reception. In addition, in a case where the A-IoT UE cannot transmit and/or receive at an appropriate timing, the A-IoT UE may consume extra power.

Therefore, in the following, a description will be given of proposals related to the communication timing of information or a signal in consideration of the timing relationship between two steps among some steps described above in the communication flow of DT and the communication flow of DO-DTT in Topology 1 and Topology 2.

Specifically, the present proposals include Proposal 1 related to the communication timing in the communication flow of DT and Proposal 2 related to the communication timing in the communication flow of DO-DTT. Proposal 1 is composed of more specific Proposal 1-1 and Proposal 1-2, and Proposal 2 is composed of more specific Proposal 2-1 to Proposal 2-3.

A part or all of the proposals described below may be applied to all A-IoT device types (for example, all of devices A, B, and C described above) or may be applied to some A-IoT device types (for example, only a specific A-IoT device type).

In addition, different options in the proposals described below may be applied to different A-IoT device types.

In addition, different A-IoT device types may have different A-IoT capabilities.

In addition, a part or all of the proposals described below may be applied only in a case where the corresponding capability is supported by the A-IoT device and/or in a case where the corresponding function is enabled by the network.

In addition, the matters described in Proposal 1-1, Proposal 1-2, Proposal 2-1, Proposal 2-2, and Proposal 2-3 may be combined as appropriate as long as no contradiction occurs.

In the following, the term "timing" may be replaced with "time".

The term "waking up" may mean that the circuitry of the A-IoT UE is activated or returned from sleep (or sleep state or mode). A state in which the A-IoT UE is awake may be referred to as a wake-up state or mode, an activated state or mode, a normal state or mode, an operating state or mode, a connected state or mode, or the like. Accordingly, the A-IoT UE may have a wake-up state and a sleep state.

A signal such as a carrier waveform or an RF signal transmitted from a base station, an int. UE, or the like to wake up the (circuitry of) A-IoT UE may be a wake-up signal (WUS) used in the current radio communication system or a signal similar to the WUS. The signal may be referred to as a signal for waking up the (circuitry of) A-IoT UE, a wake-up signal (WUS), an activation signal, or the like.

### <Proposal 1-1>

Hereinafter, a proposal (Proposal 1-1) related to a timing relationship between Step 1 and Step 2 below for DT in Topology 1 will be described.

Step 1: The A-IoT UE is woken up by a carrier waveform (or may be replaced with a carrier wave) or another RF signal, which serves as an energy source that supplies energy to the A-IoT UE, transmitted from a BS.

Step 2: The A-IoT UE receives information from the BS.

### [Option 1]

Step 2 may be executed at a timing at which a certain time offset has elapsed from Step 1. The A-IoT UE may receive information from the BS at a timing at which a certain time offset has elapsed from Step 1.

The granularity of the time offset may be a subframe/slot/slot group/symbol/symbol group/second/millisecond/microsecond, or may be any time unit defined for A-IoT.

The time offset may be defined in the specification. In this case, the time offset may be, for example, 0 seconds, 1 millisecond, 1 slot, or the like. All A-IoT UEs may support the time offset value, or the time offset may be defined according to the details/characteristics of the carrier waveform. In the latter case, different offsets may be defined, for example, depending on the method of the carrier waveform, whether the carrier waveform is modulated, or the like.

In addition, the time offset may be reported as the A-IoT capability (the A-IoT UE may report the time offset to the BS as the A-IoT capability).

In addition, the time offset may be indicated to the A-IoT UE by the BS. For example, the A-IoT UE may receive information (for example, configuration information) related to the time offset from the BS before Step 2(/1) and store the information, and the time offset may be pre-configured by the information. In a case where the time offset is indicated by the BS, the minimum allowed value and/or the maximum allowed value may be defined in the specification, or may be reported as the A-IoT capability (the A-IoT UE may report the minimum allowed value and/or the maximum allowed value to the BS as the A-IoT capability). In other words, the A-IoT UE need not assume a time offset smaller than value X (minimum allowed value) and/or a time offset larger than value Y (maximum allowed value) (the A-IoT UE need not assume that the time offset is smaller than value X (minimum allowed value) and/or larger than value Y (maximum allowed value)).

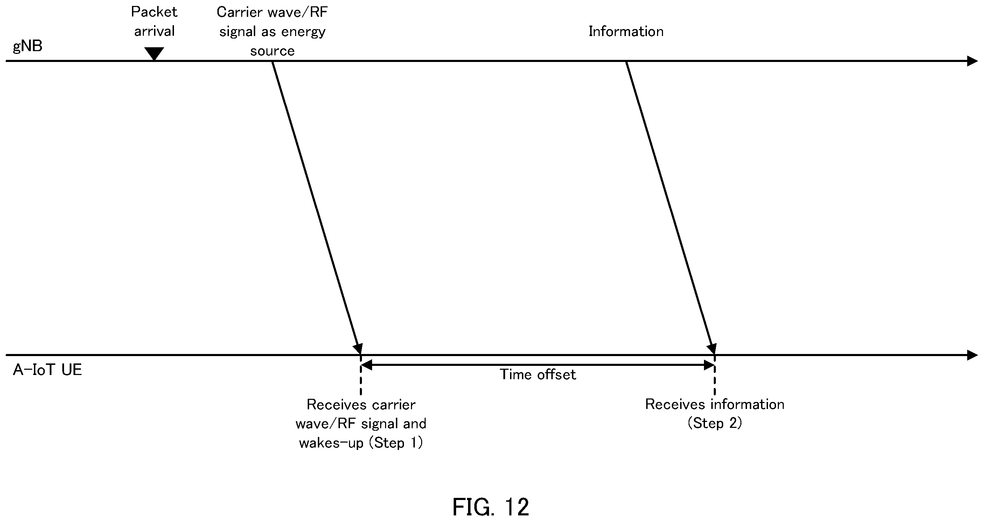

FIG. 12 is a diagram illustrating an example of an exchange between the BS and the A-IoT UE according to Option 1 of Proposal 1-1.

As illustrated in the drawing, for example, the BS (gNB) transmits a carrier wave/RF signal as an energy source to the A-IoT UE in response to generation of a packet in a higher layer such as an application layer of the gNB (corresponding to "Packet arrival" indicated in the drawing), and the A-IoT UE wakes up by receiving the carrier wave/RF signal (Step 1). Then, the gNB transmits information to the A-IoT UE, and the A-IoT UE receives the information (Step 2) from the gNB at a timing at which the time offset has elapsed from Step 1.

### [Option 2]

Step 2 may be executed within a certain time window. The time window may be referred to as a time interval, a period, or the like (in which the A-IoT UE performs monitoring, for example). For example, the A-IoT UE may receive information from the BS within a certain time window.

The head or start of the time window may be a timing at which a certain time offset has elapsed from Step 1.

The granularity of the time window and the time offset may be a subframe/slot/slot group/symbol/symbol group/second/millisecond/microsecond, or may be any time unit defined for A-IoT.

The time offset may be defined in the specification. In this case, the time offset may be, for example, 0 seconds, 1 millisecond, 1 slot, or the like. All A-IoT UEs may support the time offset value, or the time offset may be defined according to the details/characteristics of the carrier waveform. In the latter case, different offsets may be defined, for example, depending on the method of the carrier waveform, whether the carrier waveform is modulated, or the like.

In addition, the time offset may be reported as the A-IoT capability (the A-IoT UE may report the time offset to the BS as the A-IoT capability).

In addition, the time offset may be indicated to the A-IoT UE by the BS. For example, the A-IoT UE may receive information (for example, configuration information) related to the time offset from the BS before Step 2(/1) and store the information, and the time offset may be pre-configured by the information. In a case where the time offset is indicated by the BS, the minimum allowed value and/or the maximum allowed value may be defined in the specification or may be reported as the A-IoT capability (the A-IoT UE may report the minimum allowed value and/or the maximum allowed value to the BS as the A-IoT capability). In other words, the A-IoT UE need not assume a time offset smaller than value X (minimum allowed value) and/or a time offset larger than value Y (maximum allowed value) (the A-IoT UE need not assume that the time offset is smaller than value X (minimum allowed value) and/or larger than value Y (maximum allowed value)).

The length of the time window (time window length) may be defined/reported/indicated as described in (2a) to (2c) below.

(2a) The time window length may be defined in the specification. In this case, the time window length may be, for example, 1 millisecond, 4 slots, or the like. All A-IoT UEs may support the time window length value, or the time window length may be defined according to the details/characteristics of the carrier waveform. In the latter case, different time window lengths may be defined, for example, depending on the method of the carrier waveform, whether the carrier waveform is modulated, or the like.

(2b) The time window length may be reported as the A-IoT capability (the A-IoT UE may report the time window length to the BS as the A-IoT capability).

(2c) The time window length may be indicated to the A-IoT UE by the BS. For example, the A-IoT UE may receive information (for example, configuration information) related to the time window length from the BS before Step 2(/1) and store the information, and the time window length may be pre-configured by the information. In a case where the time window length is indicated by the BS, the minimum allowed value and/or the maximum allowed value may be defined in the specification, or may be reported as the A-IoT capability (the A-IoT UE may report the minimum allowed value and/or the maximum allowed value to the BS as the A-IoT capability). In other words, the A-IoT UE need not assume a time window length smaller than value X (minimum allowed value) and/or a time window length larger than value Y (maximum allowed value) (the A-IoT UE need not assume that the time window length is smaller than value X (minimum allowed value) and/or larger than value Y (maximum allowed value)).

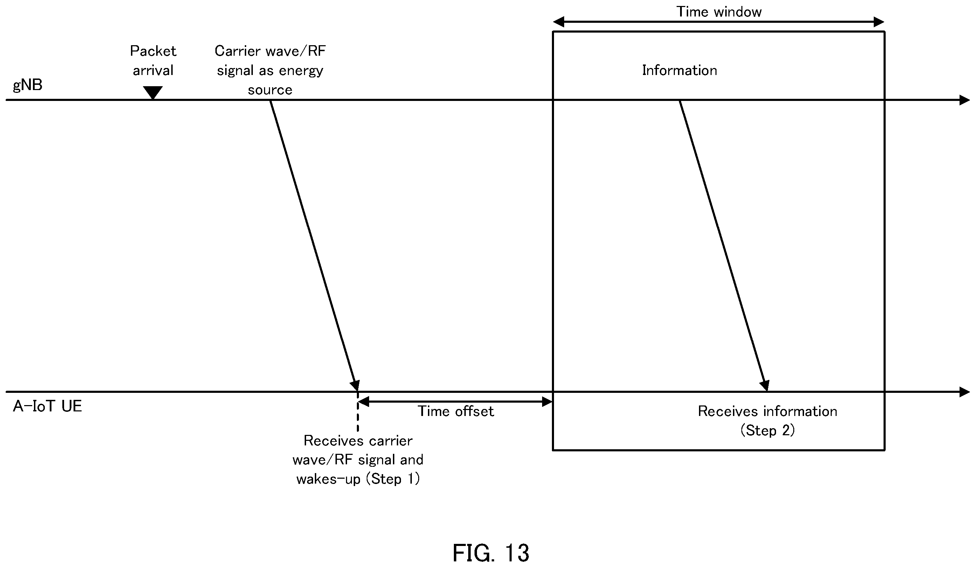

FIG. 13 is a diagram illustrating an example of the exchange between the BS and the A-IoT UE according to Option 2 of Proposal 1-1.

As illustrated in the drawing, for example, the BS (gNB) transmits a carrier wave/RF signal as an energy source to the A-IoT UE in response to generation of a packet in a higher layer such as an application layer of the gNB (corresponding to "Packet arrival" indicated in the drawing), and the A-IoT UE wakes up by receiving the carrier wave/RF signal (Step 1). Then, the gNB transmits information to the A-IoT UE, and the A-IoT UE receives the information (Step 2) from the gNB within a time window that starts at a timing at which a time offset has elapsed from Step 1.

Further, in Option 2, the A-IoT UE may monitor information from the BS within the time window after waking up. In other words, the A-IoT UE may assume that information from the BS is transmitted or received within the time window. Further, for example, in a case where the A-IoT UE does not receive information from the BS within the time window, it may transition to or shift into the sleep state. In other words, in the case where the A-IoT UE does not receive information from the BS within the time window, it need not receive/monitor information from the BS after the time window (the A-IoT UE need not assume that the information is transmitted from the BS or that the information is received).

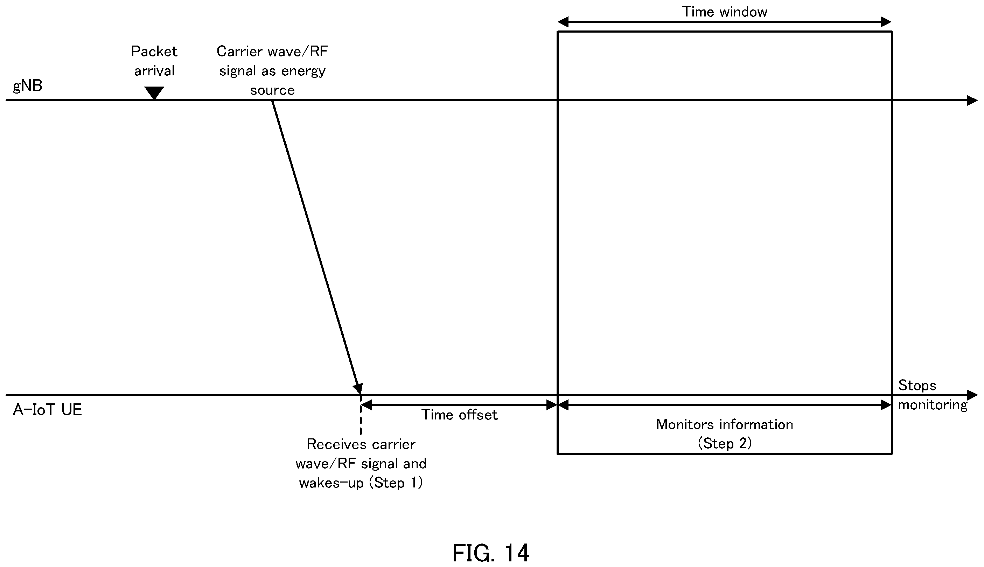

FIG. 14 is a diagram illustrating an example of the exchange between the BS and the A-IoT UE according to Option 2 of Proposal 1-1.

As illustrated in the drawing, for example, the BS (gNB) transmits a carrier wave/RF signal as an energy source to the A-IoT UE in response to generation of a packet in a higher layer such as an application layer of the gNB (corresponding to "Packet arrival" indicated in the drawing), and the A-IoT UE wakes up by receiving the carrier wave/RF signal (Step 1). Then, the A-IoT UE monitors information (Step 2) from the gNB within a time window that starts at a timing at which a time offset has elapsed from Step 1. After the time window, the A-IoT UE stops monitoring.

Note that, in Option 2, the time window may be defined to include only the start or end timing of the signal/information transmitted/received in Step 2 (that is, the other timing may be outside the time window), or may be defined to include the entire signal/information transmitted/received in Step 2 (that is, both the start timing and the end timing).

### <Variation of Proposal 1-1>

In a case where Step 2 is divided into Step 2A and Step 2B for DT in Topology 1 as follows, the content of Proposal 1-1 described above may also be applied to the timing relationship between Step 1 and Step 2A. In this case, the content of Proposal 1-1 in which "Step 2" is replaced with "Step 2A" is applied.

Step 1: The A-IoT UE is woken up by a carrier waveform or another RF signal, which serves as an energy source that supplies energy to the A-IoT UE, transmitted from a BS.

Step 2A: The A-IoT UE receives information A (for example, control information or a signal) from the BS.

Step 2B: The A-IoT UE receives information B (for example, data information or a signal) from the BS.

In this case, for example, the A-IoT UE may receive/decode information B based on information included in information A (for example, the time/frequency/code (region) resource, the modulation/waveform/encoding method, and the like included in information A). That is, information A includes information for encoding/receiving/decoding information B.

The content of Proposal 1-1 described above and/or the variation thereof may be applied to the timing relationship between Step 1 and Step 2 and/or the timing relationship between Step 1 and Step 2A for DT in Topology 2. In this case, the content of Proposal 1-1 and/or the variation thereof in which the "BS" is replaced with an "intermediate UE" is applied.

Step 1: The A-IoT UE is woken up by a carrier waveform or another RF signal, which serves as an energy source that supplies energy to the A-IoT UE, transmitted from an intermediate UE.

Step 2: The A-IoT UE receives information from the intermediate UE.
(or,
Step 2A: The A-IoT UE receives information A (for example, control information or a signal) from the intermediate UE.
Step 2B: The A-IoT UE receives information B (for example, data information or a signal) from the intermediate UE.)

Finally, in Proposal 1-1 including the variation, the time offset may be defined as a period or a section between the start timing (head) or the end timing (tail) at which a signal/information is transmitted/received in Step 1 and the start timing (head) at which a signal/information is transmitted/received in Step 2/2A or the start timing (head) of the time window.

As described above, the A-IoT UE may determine, based on the first timing or the first period at which a wake-up signal is received in Step 1, the second timing or the second period at which information/information A is received in Step 2/2A.

As described above, according to Proposal 1-1, the A-IoT UE can receive a signal/information transmitted from the BS/intermediate UE at an appropriate timing/period.

### <Proposal 1-2>

Next, a proposal (Proposal 1-2) related to a timing relationship for the following Step 2B for DT in Topology 1 will be described.

Step 1: The A-IoT UE is woken up by a carrier waveform or another RF signal, which serves as an energy source that supplies energy to the A-IoT UE, transmitted from a BS.

Step 2A: The A-IoT UE receives information A (for example, control information or a signal) from the BS.

Step 2B: The A-IoT UE receives information B (for example, data information or a signal) from the BS.

In this case, for example, the A-IoT UE may receive/decode information B based on the information included in information A (for example, the time/frequency/code (region) resource, the modulation/waveform/encoding method, and the like included in information A). That is, information A includes information for encoding/receiving/decoding information B.

### [Option 1]

Step 2B may be executed at a timing at which a certain time offset has elapsed from the previous step, as described in (a) to (c) below. For example, the A-IoT UE may receive information B from the BS at a timing at which a certain time offset has elapsed from the previous step.
(a) Timing at which a time offset has elapsed from Step 2A
(b) Timing at which a time offset has elapsed from Step 1
(c) Timing at which a time offset has elapsed from the start (head)/end (tail) of the time window for Step 2A in a case where information A is received within the time window in Step 2A

The granularity of the time offset may be a subframe/slot/slot group/symbol/symbol group/second/millisecond/microsecond, or may be any time unit defined for A-IoT.

The time offset may be defined in the specification. In this case, the time offset may be, for example, 0 seconds, 1 millisecond, 1 slot, or the like. All A-IoT UEs may support the time offset value, or the time offset may be defined according to the details/characteristics of the carrier waveform. In the latter case, different offsets may be defined, for example, depending on the method of the carrier waveform, whether the carrier waveform is modulated, or the like.

In addition, the time offset may be reported as the A-IoT capability (the A-IoT UE may report the time offset to the BS as the A-IoT capability).

In addition, the time offset may be indicated to the A-IoT UE by the BS. For example, the A-IoT UE may receive information (for example, configuration information) related to the time offset from the BS before Step 2B/2A(/1) and store the information, and the time offset may be pre-configured by the information. Further, in a case where the time offset is indicated by the BS, the time offset may be indicated in information A transmitted/received in Step 2A (the A-IoT UE may receive information A including information for indicating the time offset from the BS). In a case where the time offset is indicated by the BS, the minimum allowed value and/or the maximum allowed value may be defined in the specification or may be reported as the A-IoT capability (the A-IoT UE may report the minimum allowed value and/or the maximum allowed value to the BS as the A-IoT capability). In other words, the A-IoT UE need not assume a time offset smaller than value X (minimum allowed value) and/or a time offset larger than value Y (maximum allowed value) (the A-IoT UE need not assume that the time offset is smaller than value X (minimum allowed value) and/or larger than value Y (maximum allowed value)).

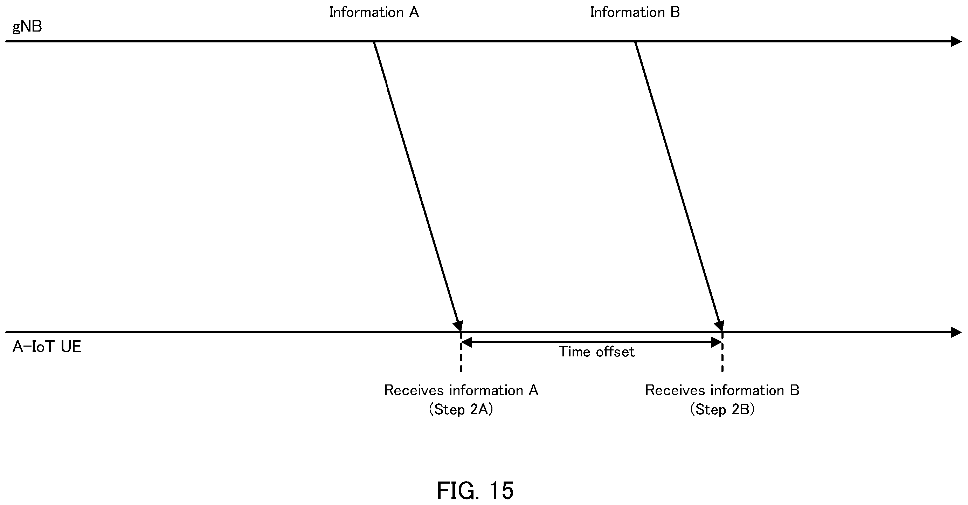

FIG. 15 is a diagram illustrating an example of the exchange between the BS and the A-IoT UE according to Option 1 of Proposal 1-2. This example corresponds to the case of (a) described above.

As illustrated in the drawing, the BS (gNB) transmits information A to the A-IoT UE, and the A-IoT UE receives information A in response (Step 2A). Then, the gNB transmits information B to the A-IoT UE, and the A-IoT UE receives information B (Step 2B) from the gNB at a timing at which a time offset has elapsed from Step 2A.

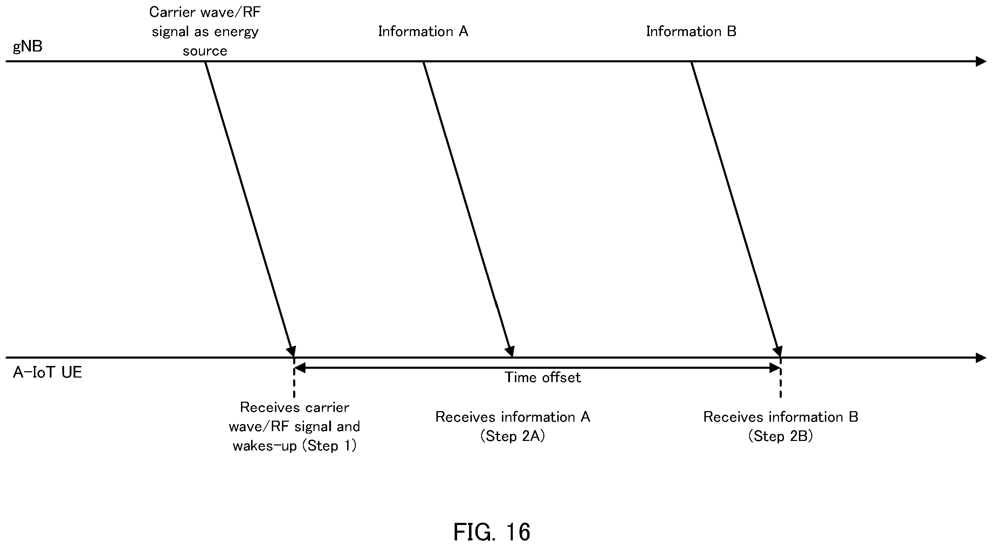

FIG. 16 is a diagram illustrating an example of the exchange between the BS and the A-IoT UE according to Option 1 of Proposal 1-2. This example corresponds to the case of (b) described above.

As illustrated in the drawing, the BS (gNB) transmits a carrier wave/RF signal to the A-IoT UE as an energy source, and the A-IoT UE is woken up by receiving the carrier wave/RF signal (Step 1). The gNB transmits information A to the A-IoT UE, and the A-IoT UE receives information A from the gNB in response (Step 2A). Then, the gNB transmits information B to the A-IoT UE, and the A-IoT UE receives information B (Step 2B) from the gNB at a timing at which a time offset has elapsed from Step 1.

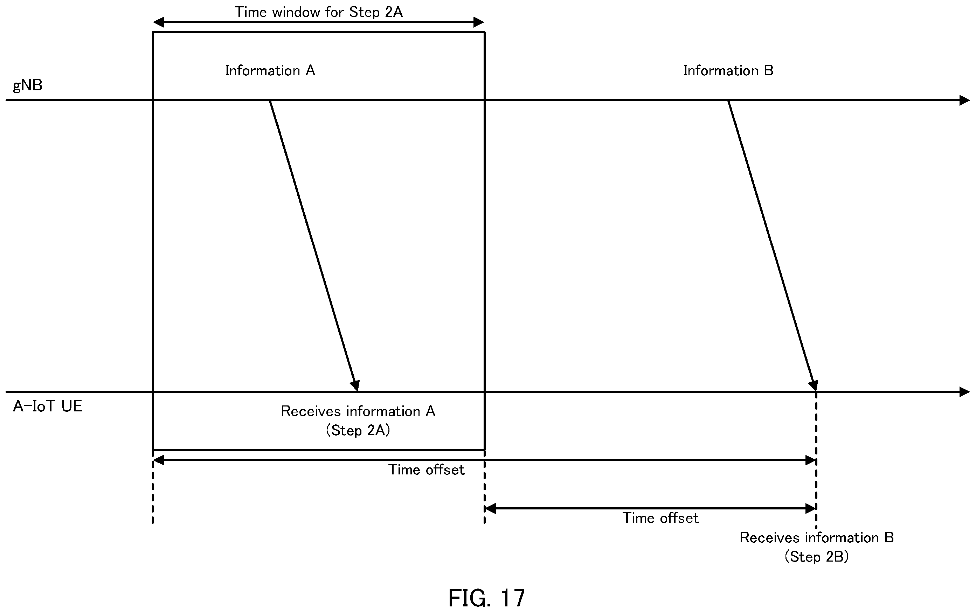

FIG. 17 is a diagram illustrating an example of the exchange between the BS and the A-IoT UE according to Option 1 of Proposal 1-2. This example corresponds to the case of (c) described above.

As illustrated in the drawing, the BS (gNB) transmits information A to the A-IoT UE, and the A-IoT UE receives information A from the gNB within a time window (Step 2A). Then, the gNB transmits information B to the A-IoT UE, and the A-IoT UE receives information B (Step 2B) from the gNB at a timing at which a time offset has elapsed from the start/end of the time window for Step 2A.

### [Option 2]

Step 2B may be executed within a certain time window. For example, the A-IoT UE may receive information B from the BS within a certain time window.

There is a possibility that the time synchronization is maintained or not maintained in the A-IoT UE and the BS. In a case where the time synchronization is not maintained, there is a possibility that the A-IoT UE does not recognize the accurate time at which information B arrives. Therefore, in Option 2, the A-IoT UE may monitor information B after receiving information A within a certain time window. In this case, information (for example, a preamble) for marking the start (head) of information B may be transmitted at the beginning of information B.

The start (head) of the time window may be a timing at which a certain time offset has elapsed from the previous step, as described in (a) to (c) below. For example, the A-IoT UE may receive information B from the BS within a time window that starts at a timing at which a certain time offset has elapsed from the previous step.
(a) Timing at which a time offset has elapsed from Step 2A
(b) Timing at which a time offset has elapsed from Step 1
(c) Timing at which a time offset has elapsed from the start (head)/end (tail) of the time window for Step 2A in a case where information A is received within the time window in Step 2A

The granularity of the time window and the time offset may be a subframe/slot/slot group/symbol/symbol group/second/millisecond/microsecond, or may be any time unit defined for A-IoT.

The time offset may be defined in the specification. In this case, the time offset may be, for example, 0 seconds, 1 millisecond, 1 slot, or the like. All A-IoT UEs may support the time offset value, or the time offset may be defined according to the details/characteristics of the carrier waveform. In the latter case, different offsets may be defined, for example, depending on the method of the carrier waveform, whether the carrier waveform is modulated, or the like.

In addition, the time offset may be reported as the A-IoT capability (the A-IoT UE may report the time offset to the BS as the A-IoT capability).

In addition, the time offset may be indicated to the A-IoT UE by the BS. For example, the A-IoT UE may receive information (for example, configuration information) related to the time offset from the BS before Step 2B/2A(/1) and store the information, and the time offset may be pre-configured by the information. Further, in a case where the time offset is indicated by the BS, the time offset may be indicated in information A transmitted/received in Step 2A (the A-IoT UE may receive information A including information for indicating the time offset from the BS). In a case where the time offset is indicated by the BS, the minimum allowed value and/or the maximum allowed value may be defined in the specification or may be reported as the A-IoT capability (the A-IoT UE may report the minimum allowed value and/or the maximum allowed value to the BS as the A-IoT capability). In other words, the A-IoT UE need not assume a time offset smaller than value X (minimum allowed value) and/or a time offset larger than value Y (maximum allowed value) (the A-IoT UE need not assume that the time offset is smaller than value X (minimum allowed value) and/or larger than value Y (maximum allowed value)).

The length of the time window (time window length) may be defined/reported/indicated as described in (2a) to (2c) below.

(2a) The time window length may be defined in the specification. In this case, the time window length may be, for example, 1 millisecond, 4 slots, or the like. All A-IoT UEs may support the time window length value, or the time window length may be defined according to the details/characteristics of the carrier waveform. In the latter case, different time window lengths may be defined, for example, depending on the method of the carrier waveform, whether the carrier waveform is modulated, or the like.

(2b) The time window length may be reported as the A-IoT capability (the A-IoT UE may report the time window length to the BS as the A-IoT capability).

(2c) The time window length may be indicated to the A-IoT UE by the BS. For example, the A-IoT UE may receive information (for example, configuration information) on the time window length from the BS before Step 2B/2A(/1) and store the information, and the time window length may be pre-configured by the information. In addition, in a case where the time window length is indicated by the BS, the time window length may be indicated in information A transmitted/received in Step 2A (the A-IoT UE may receive information A including information for indicating the time window length from the BS). In a case where the time window length is indicated by the BS, the minimum allowed value and/or the maximum allowed value may be defined in the specification, or may be reported as the A-IoT capability (the A-IoT UE may report the minimum allowed value and/or the maximum allowed value to the BS as the A-IoT capability). In other words, the A-IoT UE need not assume a time window length smaller than value X (minimum allowed value) and/or a time window length larger than value Y (maximum allowed value) (the A-IoT UE need not assume that the time window length is smaller than value X (minimum allowed value) and/or larger than value Y (maximum allowed value)).

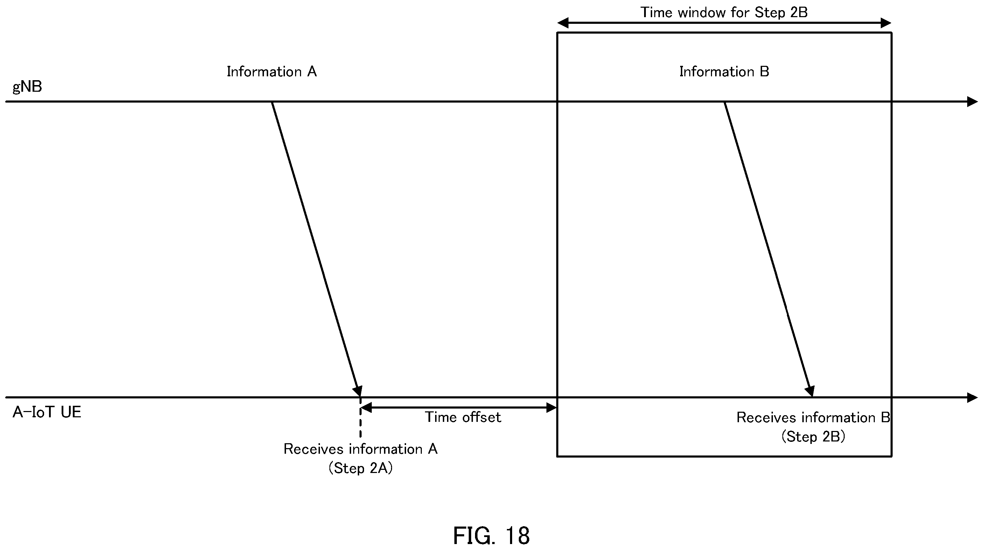

FIG. 18 is a diagram illustrating an example of the exchange between the BS and the A-IoT UE according to Option 2 of Proposal 1-2. This example corresponds to the case of (a) described above.

As illustrated in the drawing, the BS (gNB) transmits information A to the A-IoT UE, and the A-IoT UE receives information A in response (Step 2A). Then, the gNB transmits information B to the A-IoT UE, and the A-IoT UE receives the information (Step 2B) from the gNB within a time window that starts at a timing at which a time offset has elapsed from Step 2A.

In addition, in Option 2, the A-IoT UE may monitor information from the BS within the time window. In other words, the A-IoT UE may assume that information from the BS is transmitted or received within the time window. Further, for example, in a case where the A-IoT UE does not receive information from the BS within the time window, it may transition to or shift into the sleep state. In other words, in the case where the A-IoT UE does not receive information from the BS within the time window, it need not receive/monitor information from the BS after the time window (the A-IoT UE need not assume that the information is transmitted from the BS or that the information is received).

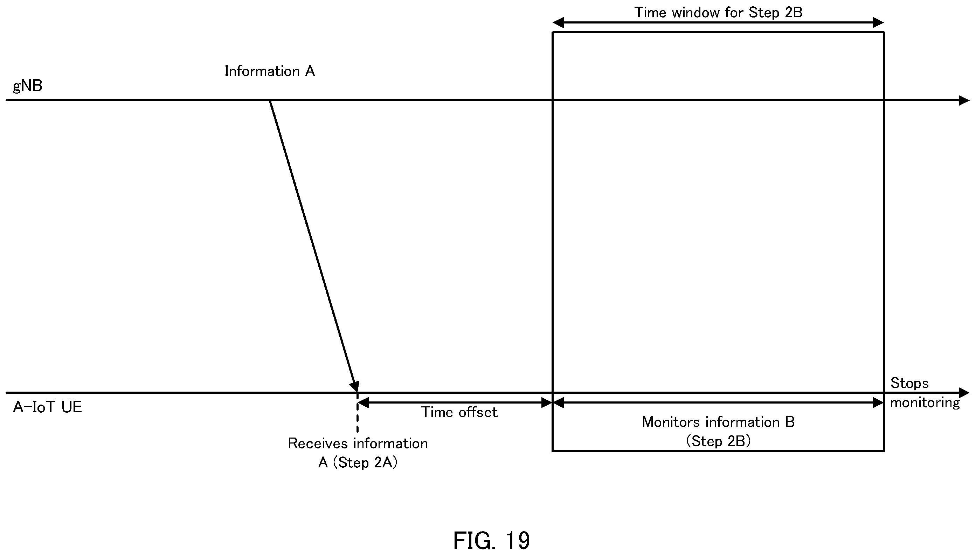

FIG. 19 is a diagram illustrating an example of the exchange between the BS and the A-IoT UE according to Option 2 of Proposal 1-2.

As illustrated in the drawing, the BS (gNB) transmits information A to the A-IoT UE, and the A-IoT UE receives information A in response (Step 2A). Then, the gNB transmits information B to the A-IoT UE, and the A-IoT UE monitors information (Step 2B) from the gNB within a time window that starts at a timing at which a time offset has elapsed from Step 2A. After the time window, the A-IoT UE stops monitoring.

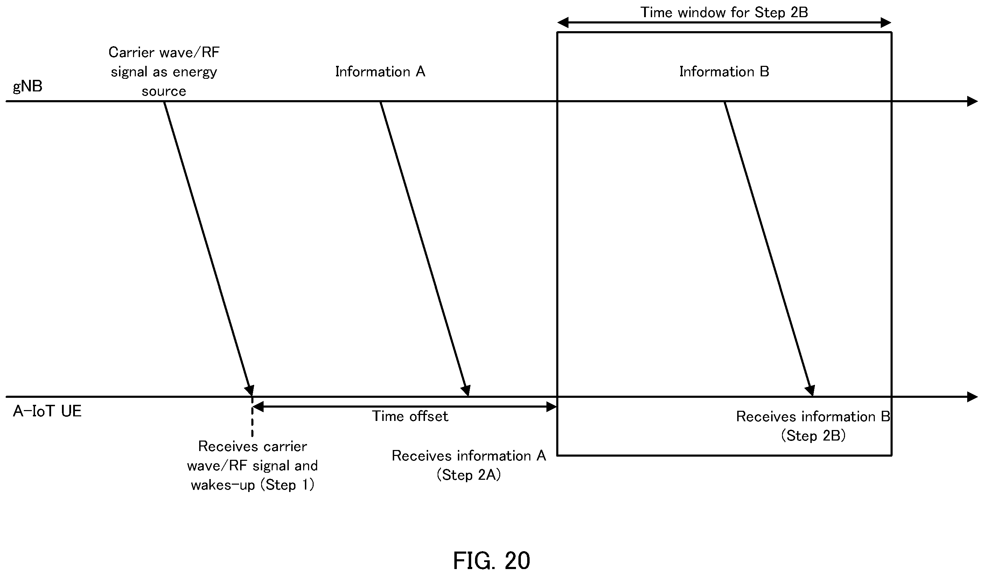

FIG. 20 is a diagram illustrating an example of the exchange between the BS and the A-IoT UE according to Option 2 of Proposal 1-2. This example corresponds to the case of (b) described above.

As illustrated in the drawing, the BS (gNB) transmits a carrier wave/RF signal to the A-IoT UE as an energy source, and the A-IoT UE is woken up by receiving the carrier wave/RF signal (Step 1). The gNB transmits information A to the A-IoT UE, and the A-IoT UE receives information A from the gNB in response (Step 2A). Then, the gNB transmits information B to the A-IoT UE, and the A-IoT UE receives the information (Step 2B) from the gNB within a time window that starts at a timing at which a time offset has elapsed from Step 1.

In addition, in Option 2, the A-IoT UE may monitor the information from the BS within the time window. In other words, the A-IoT UE may assume that information from the BS is transmitted or received within the time window. Further, for example, in a case where the A-IoT UE does not receive information from the BS within the time window, it may transition to or shift into the sleep state. In other words, in the case where the A-IoT UE does not receive information from the BS within the time window, it need not receive/monitor information from the BS after the time window (the A-IoT UE need not assume that the information is transmitted from the BS or that the information is received). In this case, the A-IoT UE monitors information (Step 2B) from the gNB within the time window that starts at a timing at which a time offset has elapsed from Step 1, and stops monitoring after the time window (see FIG. 19).

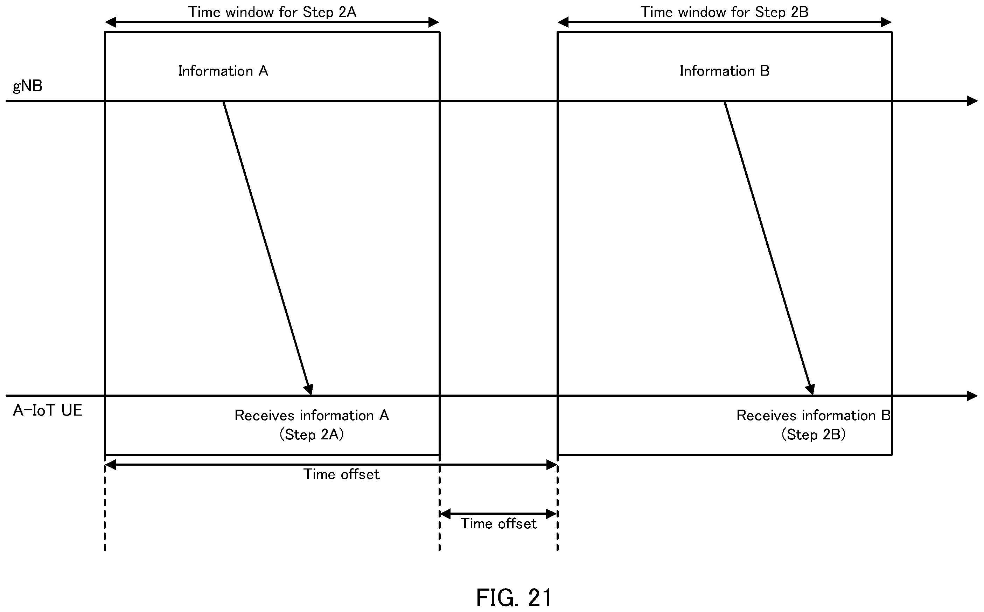

FIG. 21 is a diagram illustrating an example of the exchange between the BS and the A-IoT UE according to Option 2 of Proposal 1-2. This example corresponds to the case of (c) described above.

As illustrated in the drawing, the BS (gNB) transmits information A to the A-IoT UE, and the A-IoT UE receives information A from the gNB within a time window (Step 2A). Then, the gNB transmits information B to the A-IoT UE, and in response, the A-IoT UE receives information B (Step 2B) from the gNB within a time window that starts at a timing at which a time offset has elapsed from the start/end of the time window for Step 2A.

In addition, in Option 2, the A-IoT UE may monitor information from the BS within the time window. In other words, the A-IoT UE may assume that information from the BS is transmitted or received within a time window. Further, for example, in a case where the A-IoT UE does not receive information from the BS within the time window, it may transition to or shift into the sleep state. In other words, in the case where the A-IoT UE does not receive information from the BS within the time window, it need not receive/monitor information from the BS after the time window (the A-IoT UE need not assume that the information is transmitted from the BS or that the information is received). In this case, the A-IoT UE monitors information (Step 2B) from the gNB within the time window that starts at a timing at which a time offset has elapsed from the start/end of the time window for Step 2A, and stops monitoring after the time window (see FIG. 19).

In Option 2, the time window for Step 2B may be defined to include only the start or end timing of a signal/information (information B) transmitted/received in Step 2B (that is, the other timing may be outside the time window), or may be defined to include the entire signal/information (information B) transmitted/received in Step 2B (that is, both the start timing and the end timing).

### <Variation of Proposal 1-2>

The content of Proposal 1-2 described above may also be applied to the timing relationship for Step 2B for DT in Topology 2. In this case, the content of Proposal 1-2 in which the "BS" is replaced with an "intermediate UE" is applied.

Step 1: The A-IoT UE is woken up by a carrier waveform or another RF signal, which serves as an energy source that supplies energy to the A-IoT UE, transmitted from an intermediate UE.

Step 2A: The A-IoT UE receives information A (for example, control information or a signal) from the intermediate UE.

Step 2B: The A-IoT UE receives information B (for example, data information or a signal) from the intermediate UE.

In this case, for example, the A-IoT UE may receive/decode information B based on information included in information A (for example, the time/frequency/code (region) resource, the modulation/waveform/encoding method, and the like included in information A). That is, information A includes information for encoding/receiving/decoding information B.

Finally, in Proposal 1-2 including the variation, the time offset may be defined as a period or a section between the start timing (head) or the end timing (tail) of the transmission/reception of a signal/information or the start timing (head) or the end timing (tail) of the time window in Step 1/2A and the start timing (head) of the transmission/reception of a signal/information or the start timing (head) of the time window in Step 2B.

As described above, the A-IoT UE may determine, based on the first timing or the first period at which a wake-up signal in Step 1 or information A in Step 2A is received, the second timing or the second period at which information B is received in Step 2B.

As described above, according to Proposal 1-2, the A-IoT UE can receive a signal/information transmitted from the BS/intermediate UE at an appropriate timing/period.

### <Variation of Proposal 1>

In Option 2 of Proposal 1-2, it has been described that information (for example, a preamble) for marking the start (head) of information B may be transmitted at the beginning of information B, and the same may be applied to information A. That is, information (for example, a preamble) for marking the start (head) of information A may be transmitted at the beginning of information A.

### <Operation Example according to Proposal 1>

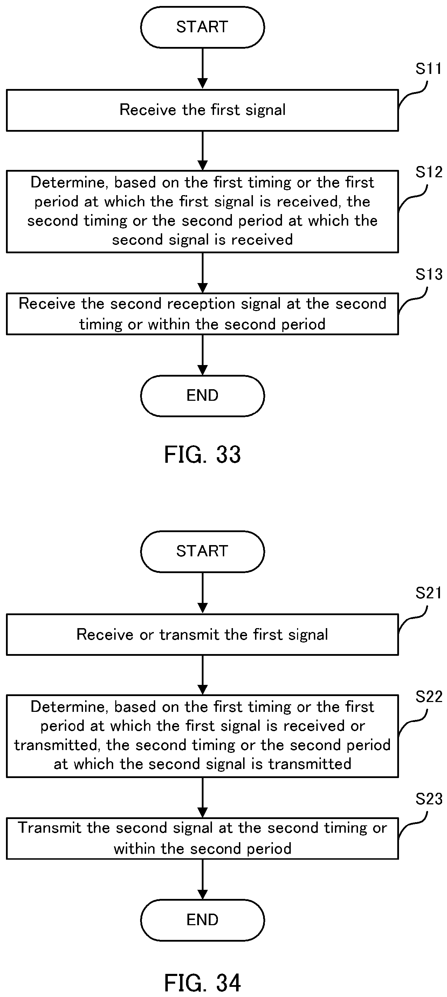

Next, an operation example of device 20 will be described with reference to FIG. 33.

In step S11, device 20 receives the first signal. Step S11 may correspond to Step 1 for DT in Topology 1/2 described above or may correspond to Step 2A for DT in Topology 1/2 described above. The first signal may correspond to a wake-up signal received in Step 1 or may correspond to information A received in Step 2A.

In step S12, device 20 determines, based on the first timing or the first period at which the first signal is received, the second timing or the second period at which the second signal is received. The second signal may correspond to information received in Step 2 for DT in Topology 1/2 described above or may correspond to information B received in Step 2B for DT in Topology 1/2 described above.

In step S13, device 20 receives the second signal at the determined second timing or within the second period. Step S13 may correspond to Step 2 for DT in Topology 1/2 described above or may correspond to Step 2B for DT in Topology 1/2 described above.

Note that steps S11 to S13 may be executed according to Proposals 1-1 and 1-2 including the above-described options and variations.

According to Proposal 1, the timing/period for receiving a DL signal/information can be appropriately determined, and thus a signal/information transmitted from the BS/intermediate UE can be appropriately received.

### <Proposal 2-1>

Regarding DL reception in the communication flow of DO-DTT, the content of Proposal 1-1 including the variation may be applied to the timing relationship between the following Step 1 and Step 2 for DO-DTT in Topology 1.

Step 1: The A-IoT UE is woken up by a carrier waveform or another RF signal, which serves as an energy source that supplies energy to the A-IoT UE, transmitted from a BS.

Step 2: The A-IoT UE receives information from the BS.

In addition, regarding DL reception in the communication flow of DO-DTT, the content of Proposal 1-1 including the variation may be applied to the timing relationship between the following Step 1 and Step 2 for DO-DTT in Topology 2. Note that, in this case, the content of Proposal 1-1 and/or the variation thereof in which the "BS" is replaced with an "intermediate UE" is applied.

Step 1: The A-IoT UE is woken up by a carrier waveform or another RF signal, which serves as an energy source that supplies energy to the A-IoT UE, transmitted from an intermediate UE.

Step 2: The A-IoT UE receives information from the intermediate UE.

According to Proposal 2-1, the A-IoT UE can receive a signal/information transmitted from the BS/intermediate UE at an appropriate timing/period.

### <Proposal 2-2>

Next, a proposal (Proposal 2-2) related to the timing relationship for the following Step 3 for DO-DTT in Topology 1 will be described.

Step 1: The A-IoT UE is woken up by a carrier waveform or another RF signal, which serves as an energy source that supplies energy to the A-IoT UE, transmitted from a BS.

Step 2: The A-IoT UE receives information from the BS.

Step 3: The A-IoT UE transmits a signal to the BS.

### [Option 1]

Step 3 may be executed at a timing at which a certain time offset has elapsed from the previous step, as described in (a) to (c) below. For example, the A-IoT UE may transmit a signal to the BS at a timing at which a certain time offset has elapsed from the previous step.
(a) Timing at which a time offset has elapsed from Step 2
(b) Timing at which a time offset has elapsed from Step 1
(c) Timing at which a time offset has elapsed from the start (head)/end (tail) of the time window for Step 2 in a case where information is received within the time window in Step 2

The granularity of the time offset may be a subframe/slot/slot group/symbol/symbol group/second/millisecond/microsecond, or may be any time unit defined for A-IoT.

The time offset may be defined in the specification. In this case, the time offset may be, for example, 0 seconds, 1 millisecond, 1 slot, or the like. All A-IoT UEs may support the time offset value, or the time offset may be defined according to the details/characteristics of the carrier waveform. In the latter case, different offsets may be defined, for example, depending on the method of the carrier waveform, whether the carrier waveform is modulated, or the like.

In addition, the time offset may be reported as the A-IoT capability (the A-IoT UE may report the time offset to the BS as the A-IoT capability).

In addition, the time offset may be indicated to the A-IoT UE by the BS. For example, the A-IoT UE may receive information (for example, configuration information) related to the time offset from the BS before Step 3/2(/1) and store the information, and the time offset may be pre-configured by the information. Further, in a case where the time offset is indicated by the BS, the time offset may be indicated in information transmitted/received in Step 2 (the A-IoT UE may receive information including information for indicating the time offset from the BS). In a case where the time offset is indicated by the BS, the minimum allowed value and/or the maximum allowed value may be defined in the specification or may be reported as the A-IoT capability (the A-IoT UE may report the minimum allowed value and/or the maximum allowed value to the BS as the A-IoT capability). In other words, the A-IoT UE need not assume a time offset smaller than value X (minimum allowed value) and/or a time offset larger than value Y (maximum allowed value) (the A-IoT UE need not assume that the time offset is smaller than value X (minimum allowed value) and/or larger than value Y (maximum allowed value)).

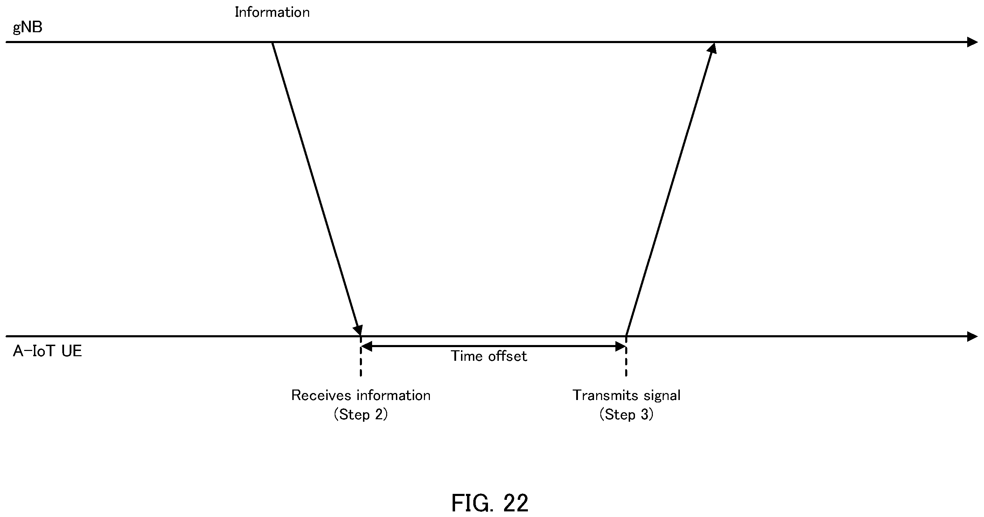

FIG. 22 is a diagram illustrating an example of the exchange between the BS and the A-IoT UE according to Option 1 of Proposal 2-2. This example corresponds to the case of (a) described above.

As illustrated in the drawing, the BS (gNB) transmits information to the A-IoT UE, and the A-IoT UE receives the information in response (Step 2). Then, the A-IoT UE transmits a signal (Step 3) to the gNB at a timing at which a time offset has elapsed from Step 2.

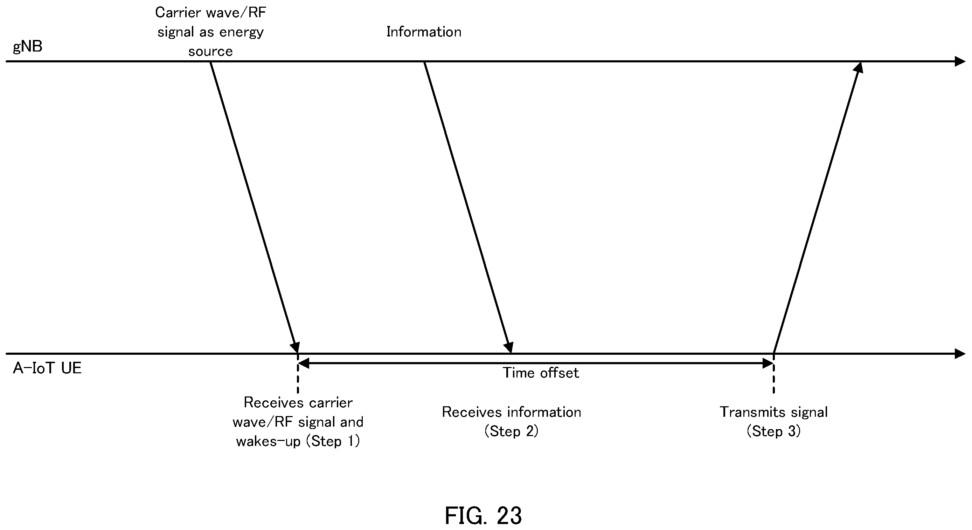

FIG. 23 is a diagram illustrating an example of the exchange between the BS and the A-IoT UE according to Option 1 of Proposal 2-2. This example corresponds to the case of (b) described above.

As illustrated in the drawing, the BS (gNB) transmits a carrier wave/RF signal to the A-IoT UE as an energy source, and the A-IoT UE is woken up by receiving the carrier wave/RF signal (Step 1). The gNB transmits information to the A-IoT UE, and the A-IoT UE receives the information from the gNB in response (Step 2). Then, the A-IoT UE transmits a signal (Step 3) to the gNB at a timing at which a time offset has elapsed from Step 1.

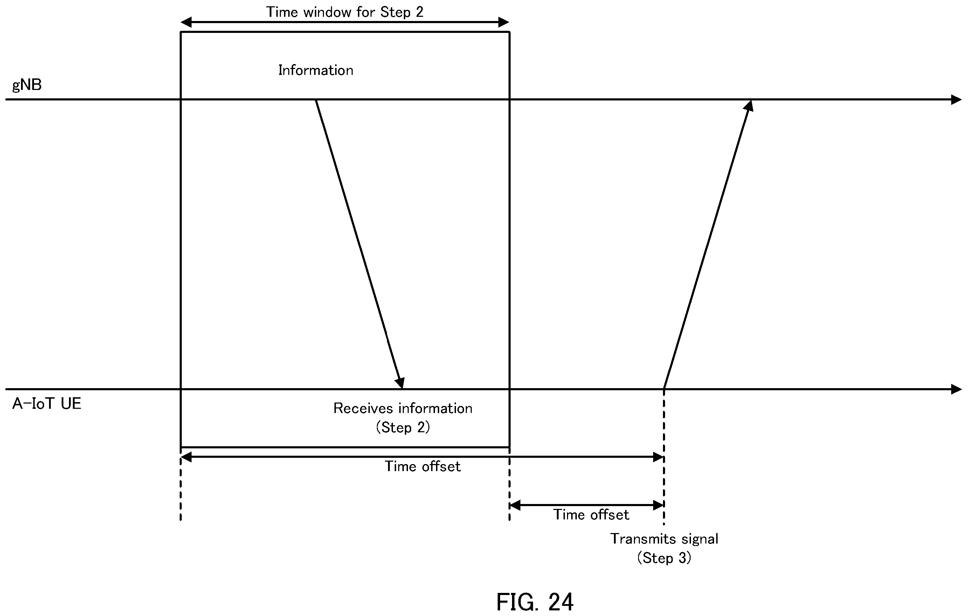

FIG. 24 is a diagram illustrating an example of the exchange between the BS and the A-IoT UE according to Option 1 of Proposal 2-2. This example corresponds to the case of (c) described above.

As illustrated in the drawing, the BS (gNB) transmits information A to the A-IoT UE, and the A-IoT UE receives the information from the gNB within a time window in response (Step 2). Then, the A-IoT UE transmits a signal (Step 3) to the gNB at a timing at which a time offset has elapsed from the start/end of the time window for Step 2.

### [Option 2]

Step 3 may be executed within a certain time window. For example, the A-IoT UE may transmit a signal to the BS within a certain time window.

Note that there is a possibility that the time synchronization is maintained or not maintained in the A-IoT UE. In a case where the time synchronization is not maintained, there is a possibility that the A-IoT UE is not notified of the accurate time to transmit the signal and does not recognize the accurate time to transmit the signal. Therefore, in Option 2, the A-IoT UE may transmit a signal at any time within a certain time window. In this case, information (for example, a preamble) for marking the start (head) of the signal may be transmitted at the beginning of the signal.

The start (head) of the time window may be a timing at which a certain time offset has elapsed from the previous step, as described in (a) to (c) below. For example, the A-IoT UE may transmit a signal to the BS within a time window that starts at a timing at which a certain time offset has elapsed from the previous step.
(a) Timing at which a time offset has elapsed from Step 2
(b) Timing at which a time offset has elapsed from Step 1
(c) Timing at which a time offset has elapsed from the start (head)/end (tail) of the time window for Step 2 in a case where information is received within the time window in Step 2

The granularity of the time window and the time offset may be a subframe/slot/slot group/symbol/symbol group/second/millisecond/microsecond, or may be any time unit defined for A-IoT.

The time offset may be defined in the specification. In this case, the time offset may be, for example, 0 seconds, 1 millisecond, 1 slot, or the like. All A-IoT UEs may support the time offset value, or the time offset may be defined according to the details/characteristics of the carrier waveform. In the latter case, different offsets may be defined, for example, depending on the method of the carrier waveform, whether the carrier waveform is modulated, or the like.

In addition, the time offset may be reported as the A-IoT capability (the A-IoT UE may report the time offset to the BS as the A-IoT capability).

In addition, the time offset may be indicated to the A-IoT UE by the BS. For example, the A-IoT UE may receive information (for example, configuration information) related to the time offset from the BS before Step 3/2(/1) and store the information, and the time offset may be pre-configured by the information. Further, in a case where the time offset is indicated by the BS, the time offset may be indicated in information transmitted/received in Step 2 (the A-IoT UE may receive information including information for indicating the time offset from the BS). In a case where the time offset is indicated by the BS, the minimum allowed value and/or the maximum allowed value may be defined in the specification or may be reported as the A-IoT capability (the A-IoT UE may report the minimum allowed value and/or the maximum allowed value to the BS as the A-IoT capability). In other words, the A-IoT UE need not assume a time offset smaller than value X (minimum allowed value) and/or a time offset larger than value Y (maximum allowed value) (the A-IoT UE need not assume that the time offset is smaller than value X (minimum allowed value) and/or larger than value Y (maximum allowed value)).

The length of the time window (time window length) may be defined/reported/indicated as described in (2a) to (2c) below.

(2a) The time window length may be defined in the specification. In this case, the time window length may be, for example, 1 millisecond, 4 slots, or the like. All A-IoT UEs may support the time window length value, or the time window length may be defined according to the details/characteristics of the carrier waveform. In the latter case, different time window lengths may be defined, for example, depending on the method of the carrier waveform, whether the carrier waveform is modulated, or the like.

(2b) The time window length may be reported as the A-IoT capability (the A-IoT UE may report the time window length to the BS as the A-IoT capability).

(2c) The time window length may be indicated to the A-IoT UE by the BS. For example, the A-IoT UE may receive information (for example, configuration information) related to the time window length from the BS before Step 3/2(/1) and store the information, and the time window length may be pre-configured by the information. In addition, in a case where the time window length is indicated by the BS, the time window length may be indicated in information transmitted/received in Step 2 (the A-IoT UE may receive information including information for indicating the time window length from the BS). In a case where the time window length is indicated by the BS, the minimum allowed value and/or the maximum allowed value may be defined in the specification, or may be reported as the A-IoT capability (the A-IoT UE may report the minimum allowed value and/or the maximum allowed value to the BS as the A-IoT capability). In other words, the A-IoT UE need not assume a time window length smaller than value X (minimum allowed value) and/or a time window length larger than value Y (maximum allowed value) (the A-IoT UE need not assume that the time window length is smaller than value X (minimum allowed value) and/or larger than value Y (maximum allowed value)).

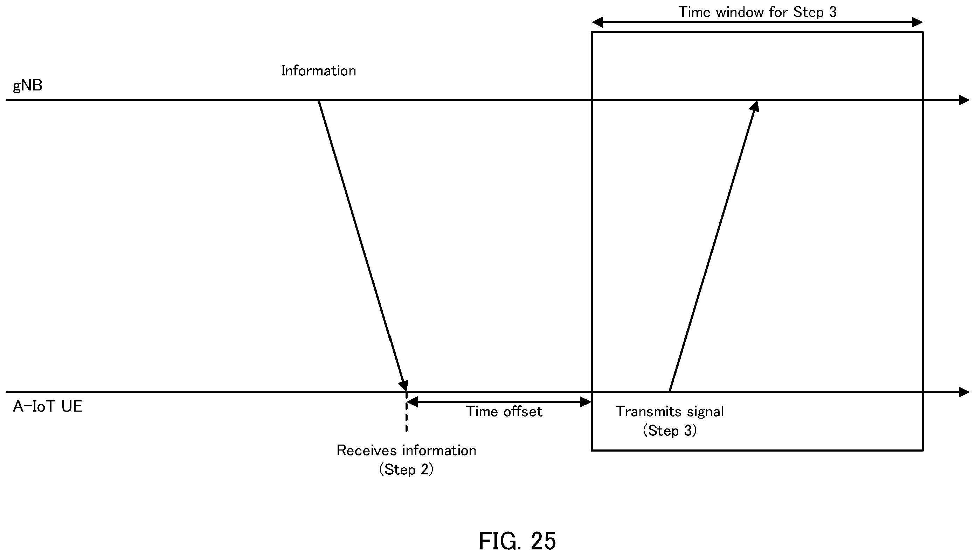

FIG. 25 is a diagram illustrating an example of the exchange between the BS and the A-IoT UE according to Option 2 of Proposal 2-2. This example corresponds to the case of (a) described above.

As illustrated in the drawing, the BS (gNB) transmits information to the A-IoT UE, and the A-IoT UE receives the information in response (Step 2). Then, the A-IoT UE transmits a signal (Step 3) to the gNB within a time window that starts at a timing at which a time offset has elapsed from Step 2.

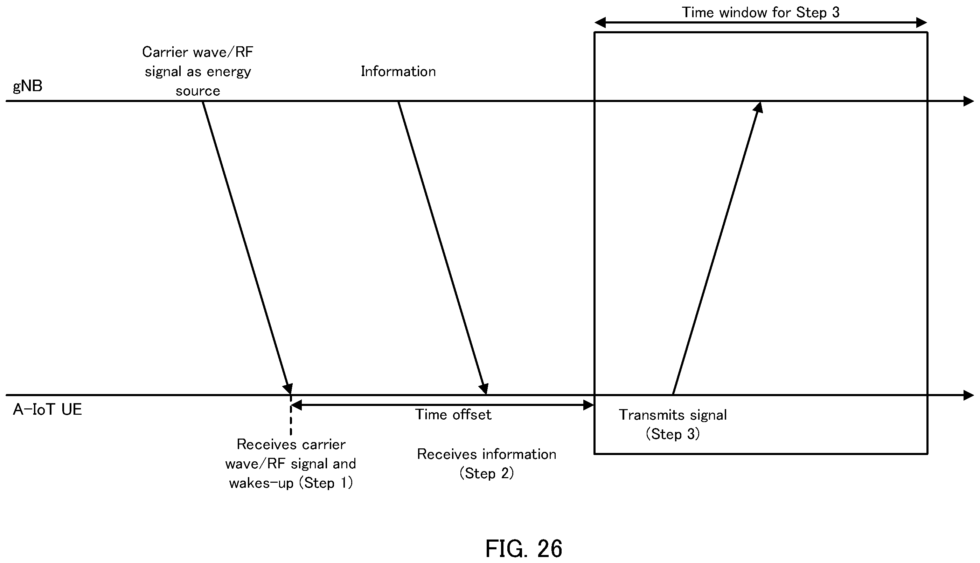

FIG. 26 is a diagram illustrating an example of the exchange between the BS and the A-IoT UE according to Option 2 of Proposal 2-2. This example corresponds to the case of (b) described above.

As illustrated in the drawing, the BS (gNB) transmits a carrier wave/RF signal to the A-IoT UE as an energy source, and the A-IoT UE is woken up by receiving the carrier wave/RF signal (Step 1). The gNB transmits information to the A-IoT UE, and the A-IoT UE receives the information from the gNB in response (Step 2). Then, the A-IoT UE transmits a signal (Step 3) to the gNB within a time window that starts at a timing at which a time offset has elapsed from Step 1.

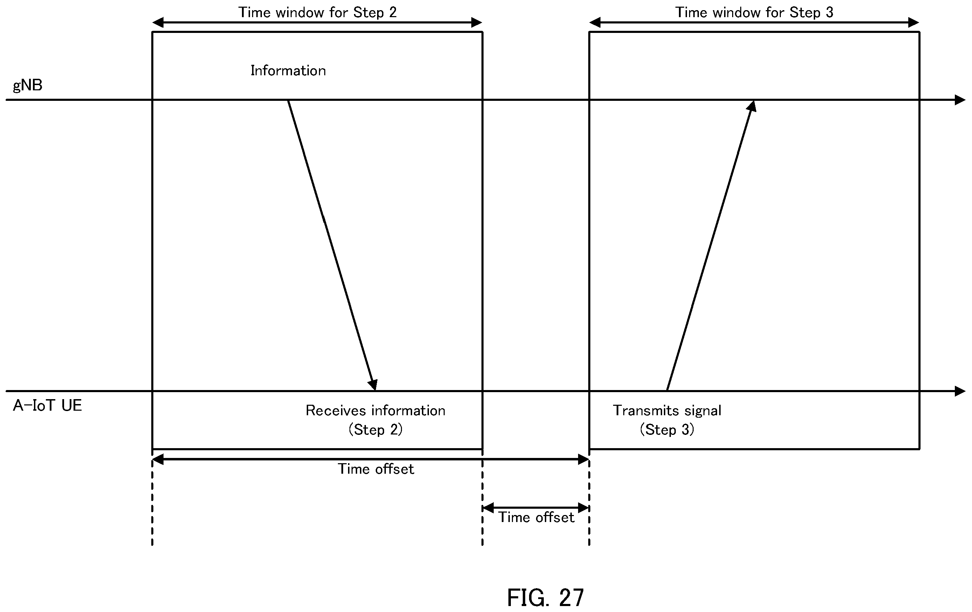

FIG. 27 is a diagram illustrating an example of the exchange between the BS and the A-IoT UE according to Option 2 of Proposal 2-2. This example corresponds to the case of (c) described above.

As illustrated in the drawing, the BS (gNB) transmits information to the A-IoT UE, and the A-IoT UE receives the information from the gNB within a time window for Step 2 (Step 2). Then, the A-IoT UE transmits a signal (Step 3) to the gNB within a time window that starts at a timing at which a time offset has elapsed from the start/end of the time window for Step 2.

In Option 2, the time window for Step 3 may be defined to include only the start or end timing of a signal/information transmitted/received in Step 3 (that is, the other timing may be outside the time window), or may be defined to include the entire signal/information transmitted/received in Step 3 (that is, both the start timing and the end timing).

### <Variation of Proposal 2-2>

In a case where Step 3 is divided into Step 3A and Step 3B for DO-DTT in Topology 1 as described below, the content of Proposal 2-2 described above may be applied to the timing relationship for Step 3A. In this case, the content of Proposal 2-2 in which "Step 3" is replaced with "Step 3A" is applied.

Step 1: The A-IoT UE is woken up by a carrier waveform or another RF signal, which serves as an energy source that supplies energy to the A-IoT UE, transmitted from a BS.

Step 2: The A-IoT UE receives information from the BS.

Step 3A: The A-IoT UE transmits signal A (for example, control information or a signal) to the BS.

Step 3B: The A-IoT UE transmits signal B (for example, data information or a signal) to the BS.

In this case, for example, the A-IoT UE may determine the time/frequency/code (region) resource, the modulation/waveform/encoding method, and the like, and may indicate to the BS the determined content in signal A. That is, signal A includes information for encoding/transmitting/decoding signal B.

The content of Proposal 2-2 and/or the variation thereof described above may be applied to the timing relationship for Step 3 and/or Step 3A for DO-DTT in Topology 2. In this case, the content of Proposal 2-2 and/or the variation thereof in which the "BS" is replaced with an "intermediate UE" is applied.

Step 1: The A-IoT UE is woken up by a carrier waveform or another RF signal, which serves as an energy source that supplies energy to the A-IoT UE, transmitted from an intermediate UE.

Step 2: The A-IoT UE receives information from the intermediate UE.

Step 3: The A-IoT UE transmits a signal to the intermediate UE.
(or,
Step 3A: The A-IoT UE transmits signal A (for example, control information or a signal) to the intermediate UE.
Step 3B: The A-IoT UE transmits signal B (for example, data information or a signal) to the intermediate UE.)

Finally, in Proposal 2-2 including the variation, the time offset may be defined as a period or a section between the start timing (head) or the end timing (tail) of transmission/reception of a signal/information in Step 1/2 or the start timing (head) or the end timing (tail) of a time window and the start timing (head) of transmission/reception of a signal/information in Step 3/3A or the start timing (head) of a time window.

As described above, the A-IoT UE may determine, based on the first timing or the first period at which a wake-up signal in Step 1/information in Step 2 is received, the second timing or the second period at which a signal/signal A is transmitted in Step 3/3A.

According to Proposal 2-2, the A-IoT UE can transmit a signal/information to the BS/intermediate UE at an appropriate timing/period.

### <Proposal 2-3>

Next, a proposal (Proposal 2-3) related to the timing relationship for the following Step 3B for DO-DTT in Topology 1 will be described.

Step 1: The A-IoT UE is woken up by a carrier waveform or another RF signal, which serves as an energy source that supplies energy to the A-IoT UE, transmitted from a BS.

Step 2: The A-IoT UE receives information from the BS.

Step 3A: The A-IoT UE transmits signal A (for example, control information or a signal) to the BS.

Step 3B: The A-IoT UE transmits signal B (for example, data information or a signal) to the BS.

In this case, for example, the A-IoT UE may determine the time/frequency/code (region) resource, the modulation/waveform/encoding method, and the like, and may indicate to the BS the determined content in signal A. That is, signal A includes information for encoding/transmitting/decoding signal B.

### [Option 1]

Step 3B may be executed at a timing at which a certain time offset has elapsed from the previous step, as described in (a) to (e) below. For example, the A-IoT UE may transmit signal B to the BS at a timing at which a certain time offset has elapsed from the previous step.
(a) Timing at which a time offset has elapsed from Step 3A
(b) Timing at which a time offset has elapsed from Step 2
(c) Timing at which a time offset has elapsed from Step 1
(d) Timing at which a time offset has elapsed from the start (head)/end (tail) of the time window for Step 2 in a case where information is received within the time window in Step 2
(e) Timing at which a time offset has elapsed from the start (head)/end (tail) of the time window for Step 3A in a case where a signal is transmitted within the time window in Step 3A

The granularity of the time offset may be a subframe/slot/slot group/symbol/symbol group/second/millisecond/microsecond, or may be any time unit defined for A-IoT.

The time offset may be defined in the specification. In this case, the time offset may be, for example, 0 seconds, 1 millisecond, 1 slot, or the like. All A-IoT UEs may support the time offset value, or the time offset may be defined according to the details/characteristics of the carrier waveform. In the latter case, different offsets may be defined, for example, depending on the method of the carrier waveform, whether the carrier waveform is modulated, or the like.

In addition, the time offset may be reported as the A-IoT capability (the A-IoT UE may report the time offset to the BS as the A-IoT capability).

In addition, the time offset may be notified to the A-IoT UE by the BS. For example, the A-IoT UE may receive information (for example, configuration information) related to the time offset from the BS before Step 3B/3A/2(/1) and store the information, and the time offset may be pre-configured by the information. Further, in a case where the time offset is indicated by the BS, the time offset may be indicated in information transmitted/received in Step 2 (the A-IoT UE may receive information including information for indicating the time offset from the BS). In a case where the time offset is indicated by the BS, the minimum allowed value and/or the maximum allowed value may be defined in the specification or may be reported as the A-IoT capability (the A-IoT UE may report the minimum allowed value and/or the maximum allowed value to the BS as the A-IoT capability). In other words, the A-IoT UE need not assume a time offset smaller than value X (minimum allowed value) and/or a time offset larger than value Y (maximum allowed value) (the A-IoT UE need not assume that the time offset is smaller than value X (minimum allowed value) and/or larger than value Y (maximum allowed value)).

Further, the time offset may be indicated to the BS by the A-IoT UE. For example, the A-IoT UE may store information including information for indicating the time offset and transmit the information to the BS (the BS may receive the information from the A-IoT UE and store the information). Further, in a case where the time offset is indicated by the A-IoT UE, the time offset may be indicated in signal A transmitted/received in Step 3A.

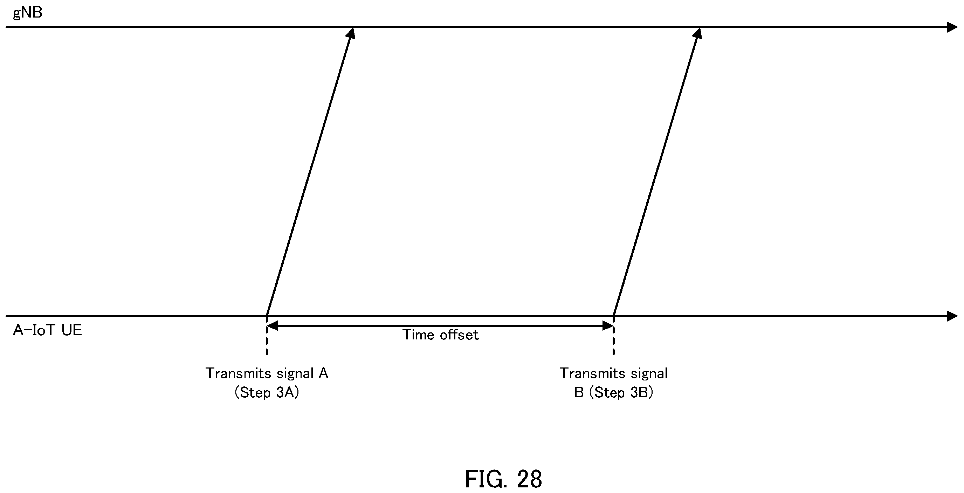

FIG. 28 is a diagram illustrating an example of the exchange between the BS and the A-IoT UE according to Option 1 of Proposal 2-3. This example corresponds to the case of (a) described above.

As illustrated in the drawing, the A-IoT UE transmits signal A to the BS (gNB) (Step 3A). Then, the A-IoT UE transmits signal B (Step 3B) to the gNB at a timing at which a time offset has elapsed from Step 3A.

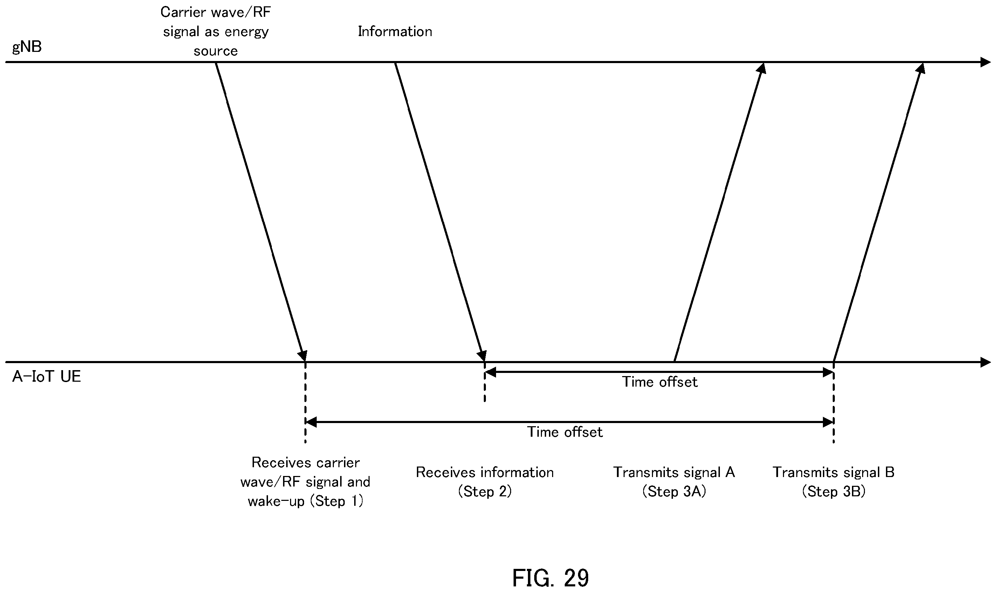

FIG. 29 is a diagram illustrating an example of the exchange between the BS and the A-IoT UE according to Option 1 of Proposal 2-3. This example corresponds to the cases of (b) and (c) described above.

As illustrated in the drawing, the BS (gNB) transmits a carrier wave/RF signal as an energy source to the A-IoT UE, and the A-IoT UE is woken up by receiving the carrier wave/RF signal (Step 1). The gNB transmits information to the A-IoT UE, and the A-IoT UE receives the information from the gNB in response (Step 2). The A-IoT UE transmits signal A to the gNB (Step 3A). Then, the A-IoT UE transmits signal B (Step 3B) to the gNB at a timing at which a time offset has elapsed from Step 2. Alternatively, the A-IoT UE transmits signal B (Step 3B) to the gNB at a timing at which a time offset has elapsed from Step 1.

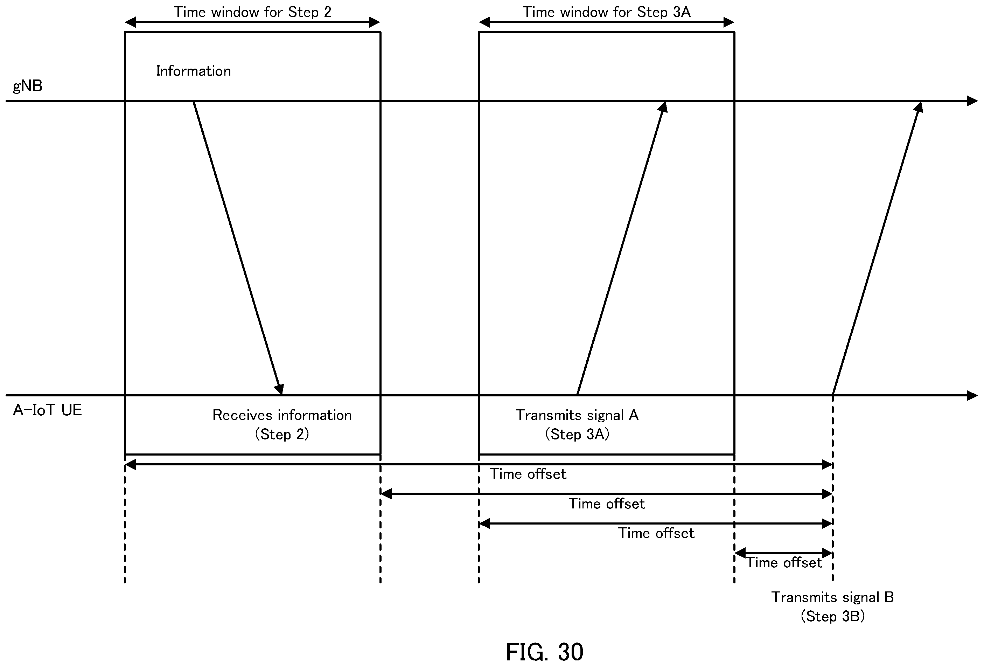

FIG. 30 is a diagram illustrating an example of the exchange between the BS and the A-IoT UE according to Option 1 of Proposal 2-3. This example corresponds to the cases of (d) and (e) described above.

As illustrated in the drawing, the BS (gNB) transmits information to the A-IoT UE, and the A-IoT UE receives the information from the gNB within the time window for Step 2 (Step 2). The A-IoT UE transmits signal A to the gNB within the time window for Step 3A (Step 3A). Then, the A-IoT UE transmits signal B (Step 3B) to the gNB at a timing at which a time offset has elapsed from the start/end of the time window for Step 2. Alternatively, the A-IoT UE transmits signal B (Step 3B) to the gNB at a timing at which a time offset has elapsed from the start/end of the time window for Step 3A.

### [Option 2]

Step 3B may be executed within a certain time window. For example, the A-IoT UE may transmit signal B to the BS within a certain time window.

Note that there is a possibility that the time synchronization is maintained or not maintained in the A-IoT UE. In a case where the time synchronization is not maintained, there is a possibility that the A-IoT UE is not notified of the accurate time to transmit the signal and does not recognize the accurate time to transmit the signal. Therefore, in Option 2, the A-IoT UE may transmit signal B at any time within a certain time window. In this case, information (for example, a preamble) for marking the start (head) of signal B may be transmitted at the beginning of signal B.

The start (head) of the time window may be a timing at which a certain time offset has elapsed from the previous step, as described in (a) to (e) below. For example, the A-IoT UE may transmit signal B to the BS within a time window that starts at a timing at which a certain time offset has elapsed from the previous step.
(a) Timing at which a time offset has elapsed from Step 3A
(b) Timing at which a time offset has elapsed from Step 2
(c) Timing at which a time offset has elapsed from Step 1
(d) Timing at which a time offset has elapsed from the start (head)/end (tail) of the time window for Step 2 in a case where information is received within the time window in Step 2
(e) Timing at which a time offset has elapsed from the start (head)/end (tail) of the time window for Step 3A in a case where a signal is transmitted within the time window in Step 3A

The granularity of the time window and the time offset may be a subframe/slot/slot group/symbol/symbol group/second/millisecond/microsecond, or may be any time unit defined for A-IoT.

The time offset may be defined in the specification. In this case, the time offset may be, for example, 0 seconds, 1 millisecond, 1 slot, or the like. All A-IoT UEs may support the time offset value, or the time offset may be defined according to the details/characteristics of the carrier waveform. In the latter case, different offsets may be defined, for example, depending on the method of the carrier waveform, whether the carrier waveform is modulated, or the like.

In addition, the time offset may be reported as the A-IoT capability (the A-IoT UE may report the time offset to the BS as the A-IoT capability).

In addition, the time offset may be indicated to the A-IoT UE by the BS. For example, the A-IoT UE may receive information (for example, configuration information) related to the time offset from the BS before Step 3B/3A/2(/1) and store the information, and the time offset may be pre-configured by the information. Further, in a case where the time offset is indicated by the BS, the time offset may be indicated in information transmitted/received in Step 2 (the A-IoT UE may receive information including information for indicating the time offset from the BS). In a case where the time offset is indicated by the BS, the minimum allowed value and/or the maximum allowed value may be defined in the specification or may be reported as the A-IoT capability (the A-IoT UE may report the minimum allowed value and/or the maximum allowed value to the BS as the A-IoT capability). In other words, the A-IoT UE need not assume a time offset smaller than value X (minimum allowed value) and/or a time offset larger than value Y (maximum allowed value) (the A-IoT UE need not assume that the time offset is smaller than value X (minimum allowed value) and/or larger than value Y (maximum allowed value)).

Further, the time offset may be indicated to the BS by the A-IoT UE. For example, the A-IoT UE may store information including information for indicating the time offset and transmit the information to the BS (the BS may receive the information from the A-IoT UE and store the information). Further, in a case where the time offset is indicated by the A-IoT UE, the time offset may be indicated in signal A transmitted/received in Step 3A.

The length of the time window (time window length) may be defined/reported/indicated as described in (2a) to (2d) below.

(2a) The time window length may be defined in the specification. In this case, the time window length may be, for example, 1 millisecond, 4 slots, or the like. All A-IoT UEs may support the time window length value, or the time window length may be defined according to the details/characteristics of the carrier waveform. In the latter case, different time window lengths may be defined, for example, depending on the method of the carrier waveform, whether the carrier waveform is modulated, or the like.

(2b) The time window length may be reported as the A-IoT capability (the A-IoT UE may report the time window length to the BS as the A-IoT capability).

(2c) The time window length may be indicated to the A-IoT UE by the BS. For example, the A-IoT UE may receive information (for example, configuration information) on the time window length from the BS before Step 3B/3A/2(/1) and store the information, and the time window length may be pre-configured by the information. In addition, in a case where the time window length is indicated by the BS, the time window length may be indicated in information transmitted/received in Step 2 (the A-IoT UE may receive information including information for indicating the time window length from the BS). In a case where the time window length is indicated by the BS, the minimum allowed value and/or the maximum allowed value may be defined in the specification, or may be reported as the A-IoT capability (the A-IoT UE may report the minimum allowed value and/or the maximum allowed value to the BS as the A-IoT capability). In other words, the A-IoT UE need not assume a time window length smaller than value X (minimum allowed value) and/or a time window length larger than value Y (maximum allowed value) (the A-IoT UE need not assume that the time window length is smaller than value X (minimum allowed value) and/or larger than value Y (maximum allowed value)).

(2d) The time window length may be indicated to the BS by the A-IoT UE. For example, the A-IoT UE may store information including information for indicating the time window length and transmit the information to the BS (the BS may receive the information from the A-IoT UE and store the information). In addition, in a case where the time window length is indicated by the A-IoT UE, the time window length may be indicated in signal A transmitted/received in Step 3A.

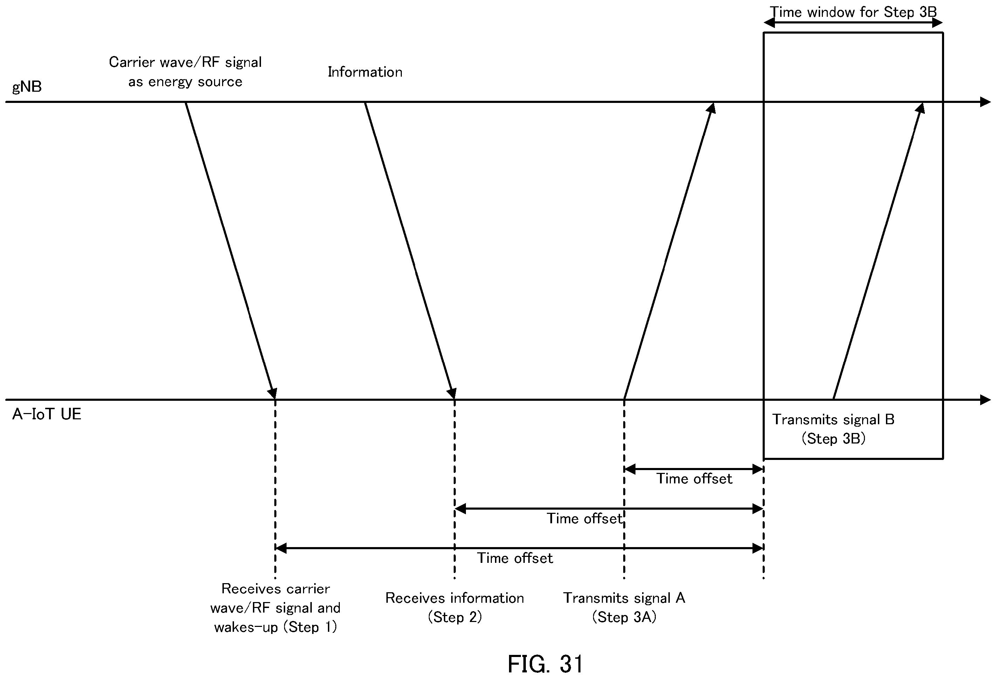

FIG. 31 is a diagram illustrating an example of the exchange between the BS and the A-IoT UE according to Option 2 of Proposal 2-3. This example corresponds to the cases of (a), (b), and (c) described above.

As illustrated in the drawing, the BS (gNB) transmits a carrier wave/RF signal as an energy source to the A-IoT UE, and the A-IoT UE is woken up by receiving the carrier wave/RF signal (Step 1). The gNB transmits information to the A-IoT UE, and the A-IoT UE receives the information from the gNB in response (Step 2). The A-IoT UE transmits signal A to the gNB (Step 3A). Then, the A-IoT UE transmits signal B (Step 3B) to the gNB within a time window that starts at a timing after a time offset has elapsed from Step 3A. Alternatively, the A-IoT UE transmits signal B (Step 3B) to the gNB within a time window that starts at a timing after a time offset has elapsed from Step 2. Alternatively, the A-IoT UE transmits signal B (Step 3B) to the gNB within a time window that starts at a timing after a time offset has elapsed from Step 1.

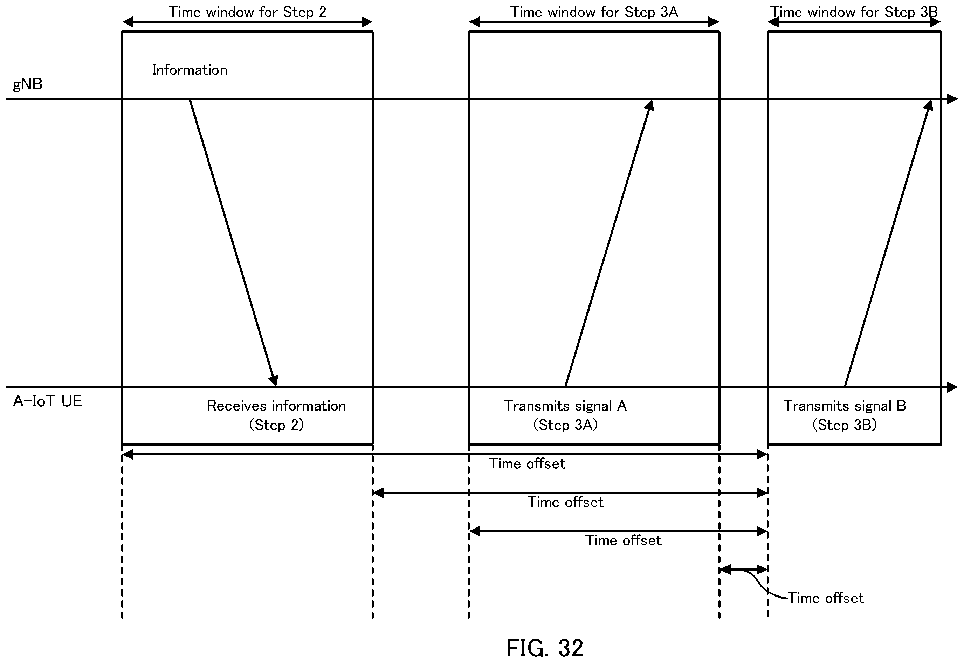

FIG. 32 is a diagram illustrating an example of the exchange between the BS and the A-IoT UE according to Option 2 of Proposal 2-3. This example corresponds to the cases of (d) and (e) described above.

As illustrated in the drawing, the BS (gNB) transmits information to the A-IoT UE, and the A-IoT UE receives the information from the gNB within the time window for Step 2 in response (Step 2). The A-IoT UE transmits signal A to the gNB within the time window for Step 3A (Step 3A). Then, the A-IoT UE transmits signal B (Step 3B) to the gNB within a time window that starts at a timing after a time offset has elapsed from the start/end of the time window for Step 2. Alternatively, the A-IoT UE transmits signal B (Step 3B) to the gNB within a time window that starts at a timing after a time offset has elapsed from the start/end of the time window for Step 3A.

In Option 2, the time window for Step 3B may be defined to include only the start or end timing of a signal/information (signal B) transmitted/received in Step 3B (that is, the other timing may be outside the time window), or may be defined to include the entire signal/information (signal B) transmitted/received in Step 3B (that is, both the start timing and the end timing).

### <Variation of Proposal 2-3>

The content of Proposal 2-3 described above may also be applied to the timing relationship for Step 3B for DO-DTT in Topology 2. In this case, the content of Proposal 2-3 in which the "BS" is replaced with an "intermediate UE" is applied.

Step 1: The A-IoT UE is woken up by a carrier waveform or another RF signal, which serves as an energy source that supplies energy to the A-IoT UE, transmitted from an intermediate UE.

Step 2: The A-IoT UE receives information from the intermediate UE.

Step 3A: The A-IoT UE transmits signal A (for example, control information or a signal) to the intermediate UE.

Step 3B: The A-IoT UE transmits signal B (for example, data information or a signal) to the intermediate UE.

Finally, in Proposal 2-3 including the variation, the time offset may be defined as a period or a section between the start timing (head) or the end timing (tail) of transmission/reception of a signal/information in Step 1/2/3A or the start timing (head) or the end timing (tail) of a time window and the start timing (head) of transmission/reception of a signal/information in Step 3B or the start timing (head) of a time window.

As described above, the A-IoT UE may determine, based on the first timing or the first period at which a wake-up signal in Step 1 or information in Step 2 is received or signal A is transmitted in Step 3A, the second timing or the second period at which signal B is transmitted in Step 3B.

According to Proposal 2-3, the A-IoT UE can transmit a signal/information to the BS/intermediate UE at an appropriate timing/period.

### <Variation of Proposal 2>

In Option 2 of Proposal 2-2 and Option 2 of Proposal 2-3, it has been described that information (for example, a preamble) for marking the start (head) of information B may be transmitted at the beginning of information B, and the same may be applied to information A. That is, information (for example, a preamble) for marking the start (head) of information A may be transmitted at the beginning of information A.

### <Operation Example according to Proposal 2>

Next, an operation example of device 20 will be described with reference to FIG. 34.

In step S21, device 20 receives or transmits the first signal. Step S21 may correspond to Step 1 for DO-DTT in Topology 1/2 described above, may correspond to Step 2 for DO-DTT in Topology 1/2 described above, or may correspond to Step 3A for DO-DTT in Topology 1/2 described above. The first signal may correspond to a wake-up signal received in Step 1, may correspond to information received in Step 2, or may correspond to signal A transmitted in Step 3A.

In step S22, device 20 determines, based on the first timing or the first period at which the first signal is received or transmitted, the second timing or the second period at which the second signal is transmitted. The second signal may correspond to a signal transmitted in Step 3 for DO-DTT in Topology 1/2 described above, or may correspond to signal B transmitted in Step 3B for DO-DTT in Topology 1/2 described above.

In step S23, device 20 transmits the second signal at the determined second timing or within the second period. Step S23 may correspond to Step 3 for DO-DTT in Topology 1/2 described above, or may correspond to Step 3B for DO-DTT in Topology 1/2 described above.

Note that steps S21 to S23 may be executed according to Proposals 2-1 to 2-3 including the above-described options and variations.

According to Proposal 2, the timing/period of DL signal/information reception and UL signal/information transmission can be appropriately determined, and thus a signal/information transmitted from the BS/intermediate UE can be appropriately received, and a signal/information can be appropriately transmitted to the BS/intermediate UE.

Next, the configurations of base station 10 and device 20 will be described. Note that the configurations of base station 10 and device 20 described below show examples of functions related to the present embodiment. Base station 10 and device 20 may have functions not illustrated in the drawings. In addition, the function classification and/or the name of the functional unit are not limited as long as the function of executing the operation according to the present embodiment is provided.

### <Configuration of Base Station>

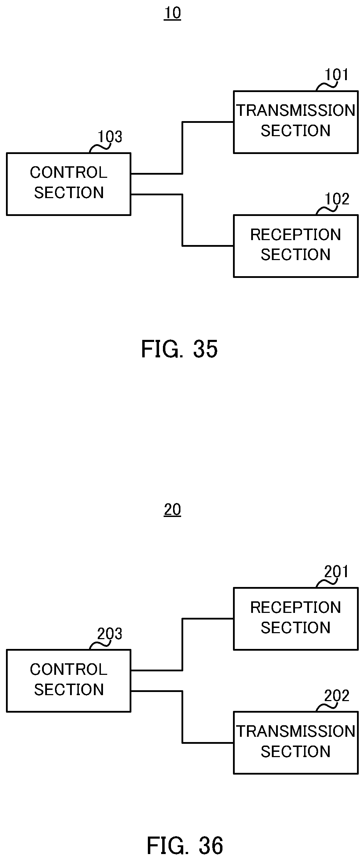

FIG. 35 is a block diagram illustrating an example of a configuration of base station 10 according to the embodiment. Base station 10 includes, for example, transmission section 101, reception section 102, and control section 103. Base station 10 communicates with device 20 (see FIG. 36) by radio. Base station 10 may be an intermediate node, an assisting node, or a terminal (a terminal of SL that communicates with device 20).

Transmission section 101 transmits a downlink (DL) signal to device 20. For example, transmission section 101 transmits the DL signal under the control of control section 103.

The DL signal may include, for example, a downlink data signal and control information (for example, downlink control information (DCI)). In addition, the DL signal may include information (for example, a UL grant) indicating scheduling related to signal transmission of device 20. In addition, the DL signal may include control information of a higher layer (for example, control information of radio resource control (RRC)). In addition, the DL signal may include a reference signal.

Channels used for transmitting the DL signal includes, for example, a data channel and a control channel. For example, the data channel may include a physical downlink shared channel (PDSCH), and the control channel may include a physical downlink control channel (PDCCH). For example, base station 10 transmits control information to device 20 using the PDCCH and transmits a downlink data signal using the PDSCH.

The reference signal included in the DL signal may include, for example, at least one of a demodulation reference signal (DMRS), a phase tracking reference signal (PTRS), a channel state information-reference signal (CSI-RS), a sounding reference signal (SRS), and a positioning reference signal (PRS) for position information. For example, the reference signal such as the DMRS or the PTRS is used for demodulating the downlink data signal and is transmitted using the PDSCH.

Reception section 102 receives an uplink (UL) signal transmitted from device 20. For example, reception section 102 receives a UL signal under the control of control section 103.

Control section 103 controls a communication operation of base station 10, including transmission processing of transmission section 101 and reception processing of reception section 102.

For example, control section 103 acquires information such as data and control information from a higher layer, and outputs the information to transmission section 101. In addition, control section 103 outputs data and control information received from reception section 102 to the higher layer.

For example, control section 103 allocates a resource (or a channel) used for transmission and reception of the DL signal and/or a resource used for transmission and reception of the UL signal based on the signal (for example, data and control information) received from device 20 and/or the data and control information acquired from the higher layer. The information on the allocated resource may be included in control information to be transmitted to device 20.

Control section 103 configures a PUCCH resource as an example of allocation of a resource used for transmission and reception of the UL signal. Information on the configuration of the PUCCH (PUCCH configuration information), such as a PUCCH cell timing pattern, may be indicated to device 20 by the RRC.

Here, transmission section 101 and reception section 102 (may be collectively referred to as a communication section) communicate with device 20.

For example, transmission section 101 may transmit the first signal and the second signal. The first signal may be a signal for waking up device 20 or a signal including information for receiving the second signal.

Further, for example, transmission section 101 may transmit the first signal, and reception section 102 may receive the first signal. Reception section 102 may receive the first signal, and the first signal may be a signal including information for transmitting the second signal. Reception section 102 may receive the second signal at any timing within the second period.

### <Configuration of Device>

FIG. 36 is a block diagram illustrating an example of a configuration of device 20 according to the embodiment. Device 20 includes, for example, reception section 201, transmission section 202, and control section 203. Device 20 communicates with, for example, base station 10 by radio. Device 20 may be, for example, an A-IoT UE.

Reception section 201 receives a DL signal transmitted from base station 10. For example, reception section 201 receives the DL signal under the control of control section 203.

Transmission section 202 transmits a UL signal to base station 10. For example, transmission section 202 transmits a UL signal under the control of control section 203.

The UL signal may include, for example, an uplink data signal and control information (for example, uplink control information (UCI)). For example, information on the processing capability of device 20 (for example, A-IoT capability) may be included. In addition, the UL signal may include a reference signal.

Channels used for transmitting the UL signal includes, for example, a data channel and a control channel. For example, the data channel may include a physical uplink shared channel (PUSCH), and the control channel may include a physical uplink control channel (PUCCH). For example, device 20 transmits control information using the PUCCH and transmits an uplink data signal using the PUSCH to base station 10.

The reference signal included in the UL signal may include, for example, at least one of a DMRS, a PTRS, a CSI-RS, an SRS, or a PRS. For example, a reference signal such as the DMRS or the PTRS is used for demodulating the uplink data signal and is transmitted using an uplink channel (for example, PUSCH).

Control section 203 controls a communication operation of device 20, including reception processing of reception section 201 and transmission processing of transmission section 202.

For example, control section 203 acquires information such as data and control information from a higher layer, and outputs the information to transmission section 202. In addition, control section 203 outputs data and control information received from reception section 201 to the higher layer.

For example, control section 203 controls transmission of information to be fed back to base station 10. The information to be fed back to base station 10 may include, for example, HARQ ACK/NACK, channel state information (CSI), or a scheduling request (SR). The information to be fed back to base station 10 may be included in the UCI. The UCI is transmitted, for example, in a resource of the PUCCH.

Control section 203 configures a PUCCH resource based on the configuration information (for example, DCI and/or configuration information such as a PUCCH cell timing pattern indicated by RRC) received from base station 10. Control section 203 determines a PUCCH resource to be used for transmitting the information to be fed back to base station 10. Transmission section 202 transmits the information to be fed back to base station 10 in the PUCCH resource determined by control section 203 under the control of control section 203.

The channels used for the transmission of the DL signal and the channels used for the transmission of the UL signal are not limited to the above-described examples. For example, the channels used for transmitting the DL signal and the channels used for transmitting the UL signal may include a random access channel (RACH) and a physical broadcast channel (PBCH). The RACH may be used, for example, for transmitting DCI including a random access radio network temporary identifier (RA-RNTI).

Here, reception section 201 and transmission section 202 (may be collectively referred to as a communication section) communicate with a network such as base station 10.

For example, the communication section may receive the first signal, and control section 203 may determine, based on the first timing or the first period at which the first signal is received, the second timing or the second period at which the second signal is received by the communication section. Control section 203 may determine the second timing as a timing at which a specific time has elapsed from the first timing, the start timing of the first period, or the end timing of the first period. Control section 203 may determine the start timing of the second period as a timing at which a specific time has elapsed from the first timing, the start timing of the first period, or the end timing of the first period. The first signal may be a signal for waking up device 20 or a signal including information for receiving the second signal. In the wake-up mode, device 20 may monitor the second signal within the second period, and in a case where the second signal is not received within the second period, device 20 may transition from the wake-up mode to the sleep mode after the second period.

Further, for example, the communication section may receive or transmit the first signal, and control section 203 may determine, based on the first timing or the first period at which the first signal is received or transmitted, the second timing or the second period at which the second signal is transmitted by the communication section. Control section 203 may determine the second timing as a timing at which a specific time has elapsed from the first timing, the start timing of the first period, or the end timing of the first period. Control section 203 may determine the start timing of the second period as a timing at which a specific time has elapsed from the first timing, the start timing of the first period, or the end timing of the first period. The communication section may transmit the first signal, and the first signal may be a signal including information for transmitting the second signal. The communication section may transmit the second signal at any timing within the second period.

### (Summary of Embodiment)

A device according to an aspect of the present disclosure has a lower complexity than a narrow band-internet of things (NB-IoT) device, and includes a communication section that receives a first signal, and a control section that determines, based on a first timing or a first period at which the first signal is received, a second timing or a second period at which a second signal is received by the communication section.

With the above configuration, the device can appropriately determine the timing or the period of receiving a DL signal/information, and thus can appropriately receive the signal/information transmitted from the network.

In an example, the control section determines the second timing as a timing at which a specific time has elapsed from a first timing, a start timing of the first period, or an end timing of the first period.

With the above configuration, the device can receive a signal/information transmitted from the network at an appropriate timing.

In an example, the control section determines a start timing of the second period as a timing at which a specific time has elapsed from the first timing, a start timing of the first period, or an end timing of the first period.

With the above configuration, the device can appropriately receive a signal/information transmitted from the network even in a case where the device does not have a time synchronization function.

In an example, the first signal is a signal for waking up the device or a signal including information for receiving the second signal.

With the above configuration, the device can receive a signal/information transmitted from the network at an appropriate timing or period.

In an example, the device monitors the second signal within the second period in a wake-up mode, and transitions from the wake-up mode to a sleep mode after the second period in a case where the second signal is not received within the second period.

With the above configuration, the device is less likely to consume extra power.

A communication method according to an aspect of the present disclosure includes: receiving a first signal by a device having a lower complexity than a narrow band-internet of things (NB-IoT) device; and determining, by the device, based on a first timing or a first period at which the first signal is received, a second timing or a second period at which a second signal is received by the device.

With the above configuration, the device can appropriately determine the timing or the period of receiving a DL signal/information, and thus can appropriately receive the signal/information transmitted from the network.

A device according to an aspect of the present disclosure has a lower complexity than a narrow band-internet of things (NB-IoT) device, and includes a communication section that receives or transmits a first signal, and a control section that determines, based on a first timing or a first period at which the first signal is received or transmitted, a second timing or a second period at which a second signal is transmitted by the communication section.

With the above configuration, the device can appropriately determine the timing or the period of transmitting a UL signal/information, and thus can appropriately transmit the signal/information to the network.

In an example, the control section determines the second timing as a timing at which a specific time has elapsed from the first timing, a start timing of the first period, or an end timing of the first period.

With the above configuration, the device can transmit a signal/information to the network at an appropriate timing.

In an example, the control section determines a start timing of the second period as a timing at which a specific time has elapsed from the first timing, a start timing of the first period, or an end timing of the first period.

With the above configuration, the device can appropriately transmit a signal/information to the network even in a case where the device does not have a time synchronization function.

In an example, the communication section transmits the first signal, and the first signal is a signal including information for transmitting the second signal.

With the above configuration, the device can indicate to the network information for the network to receive a signal/information.

In an example, the communication section transmits the second signal at any timing within the second period.

With the above configuration, the device can appropriately transmit a signal/information to the network even in a case where the device does not have a time synchronization function.

A communication method according to an aspect of the present disclosure includes: receiving or transmitting a first signal by a device having a lower complexity than a narrow band-internet of things (NB-IoT) device; and determining, by the device, based on a first timing or a first period at which the first signal is received or transmitted, a second timing or a second period at which a second signal is transmitted by the device.

With the above configuration, the device can appropriately determine the timing of UL signal/information transmission, and thus can appropriately transmit the signal/information to the network.

The present disclosure has been described, thus far. Note that the classification of items in the above description is not essential to the present disclosure, and matters described in two or more items may be used in combination as necessary, and a matter described in an item may be applied to a matter described in another item (unless inconsistent).

### <Hardware Structure>

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

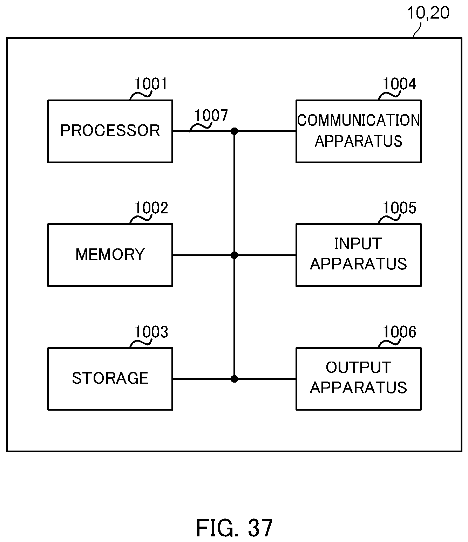

For example, a base station, a device, and so on according to one embodiment of the present disclosure may function as a computer that performs the processes of the radio communication method of the present disclosure. FIG. 37 is a diagram to show an example of a hardware structure of a base station and a device according to the embodiment. Physically, the above-described base station 10 and device 20 may each be formed as a computer apparatus that includes processor 1001, memory 1002, storage 1003, communication apparatus 1004, input apparatus 1005, output apparatus 1006, bus 1007, and so on.

Note that in the present disclosure, the words such as an apparatus, a circuit, a device, a section, a unit, and so on can be interchangeably interpreted. The hardware structure of base station 10 and device 20 may be configured to include one or more of apparatuses illustrated in the drawings, or may be configured not to include part of apparatuses.

Each function of base station 10 and devices 20 is implemented, for example, by allowing certain software (programs) to be read on hardware such as processor 1001 and memory 1002, and by allowing processor 1001 to perform calculations to control communication via communication apparatus 1004 and control at least one of reading and writing of data in memory 1002 and storage 1003.

Processor 1001 controls the whole computer by, for example, running an operating system. Processor 1001 may be configured with a central processing unit (CPU), which includes interfaces with peripheral apparatus, control apparatus, computing apparatus, a register, and so on. For example, at least part of above-described control section 103, control section 203, and so on may be implemented by processor 1001.

Furthermore, processor 1001 reads programs (program codes), software modules, data, and so on from at least one of storage 1003 and communication apparatus 1004, into memory 1002, and performs various processes according to these. As for the programs, programs to allow computers to perform at least part of the operations of the above-described embodiments are used. For example, control section 103 of base station 10 and control section 203 of device 20 may be implemented by control programs that are stored in memory 1002 and that operate on processor 1001, and other functional blocks may be implemented likewise. The various processes have been described to be performed by single processor 1001. However, the processes may be performed by two or more processors 1001 simultaneously or sequentially. Processor 1001 may be implemented by one or more chips. It should be noted that the program may be transmitted from a network via a telecommunication line.

Memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. Memory 1002 may be referred to as a "register," a "cache," a "main memory (primary storage apparatus)" and so on. Memory 1002 can store executable programs (program codes), software modules, and the like for implementing the radio communication method according to one embodiment of the present disclosure.

Storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. Storage 1003 may be referred to as "auxiliary storage apparatus." The above recording medium may be a database including memory 1002 and/or storage 1003, a server, or any other appropriate medium.

Communication apparatus 1004 is hardware (transmitting/receiving device) for allowing inter-computer communication via at least one of wired and wireless networks, and may be referred to as, for example, a "network device," a "network controller," a "network card," a "communication module," and so on. Communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmission section 101, reception section 102, reception section 201, transmission section 202, and the like, may be realized by communication apparatus 1004.

Input apparatus 1005 is an input device that receives input from the outside (for example, a keyboard, a mouse, a microphone, a switch, a button, a sensor, and so on). Output apparatus 1006 is an output device that allows sending output to the outside (for example, a display, a speaker, a Light Emitting Diode (LED) lamp, and so on). Note that input apparatus 1005 and output apparatus 1006 may be provided in an integrated structure (for example, a touch screen).

Furthermore, these types of apparatus, including processor 1001, memory 1002, and others, are connected by bus 1007 for communicating information. Bus 1007 may be formed with a single bus, or may be formed with buses that vary between pieces of apparatus.

Also, base station 10 and devices 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### <Notification and Signaling of Information>

Notification of information is by no means limited to the embodiments described in the present disclosure, and other methods may be used as well. For example, indication of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

### <Application System>

The embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New Radio (NR), New radio access (NX), Future generation radio access (FX), W-CDMA (registered trademark), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

### <Processing Procedure and the like>

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

### <Operation of Base Station>

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these. According to the above, a case is described in which there is a single network node other than the base station. However, a combination of multiple other network nodes may be considered (e.g., MME and S-GW).

### <Direction of Input and Output>

The information or signals described in this disclosure may be output from a higher layer (or lower layer) to a lower layer (or higher layer). The information or signals may be input or output through multiple network nodes.

### <Handling of Input and Output Information and the like>

The input or output information may be stored in a specific location (e.g., memory) or managed using management tables. The input or output information may be overwritten, updated, or added. The information that has been output may be deleted. The information that has been input may be transmitted to another apparatus.

### <Determination Method>

A decision or a determination may be realized by a value (0 or 1) represented by one bit, by a boolean value (true or false), or by comparison of numerical values (e.g., comparison with a predetermined values).

### <Variations and the like of Aspects>

Each aspect/embodiment described in the present disclosure may be used independently, may be used in combination, or may be used by switching according to operations. Further, indication (transmission/reporting) of predetermined information (e.g., indication (transmission/reporting) of "X") is not limited to an explicit indication (transmission/reporting), and may be performed by an implicit indication (transmission/reporting) (e.g., by not performing indication (transmission/reporting) of the predetermined information).

As described above, the present invention has been described in detail. It is apparent to a person skilled in the art that the present disclosure is not limited to one or more embodiments of the present disclosure described in the present specification. Modifications, alternatives, replacements, etc., of the present disclosure may be possible without departing from the subject matter and the scope of the present disclosure defined by the descriptions of claims. Therefore, the descriptions of the present specification are for illustrative purposes only, and are not intended to be limitations to the present disclosure.

### <Software>

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

### <Information and Signals>

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

### <System and Network>

As used in the present disclosure, the terms "system" and "network" are used interchangeably.

### <Names of Parameters and Channels>

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

### <Base Station>

In the present disclosure, the terms such as a "base station (BS)," a "radio base station," a "fixed station," a "NodeB," an "eNB (eNodeB)," a "gNB (gNodeB)," an "access point," a "transmission point," a "reception point," a "transmission/reception point," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be referred to as instructing the terminal to perform any control and/or operation based on the information by the base station.

### <Mobile Station>

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

### <Base Station/Mobile Station>

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a terminal. For example, an embodiment of the present disclosure may be applied to the structure that replaces a communication between a base station and a terminal with a communication between a plurality of terminals (for example, which may be referred to as "Device-to-Device (D2D)," "Vehicle-to-Everything (V2X)," and the like). In this case, device 20 may have the functions of base station 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the terminal in the present disclosure may be interpreted as base station. In this case, base station 10 may have the functions of device 20 described above.

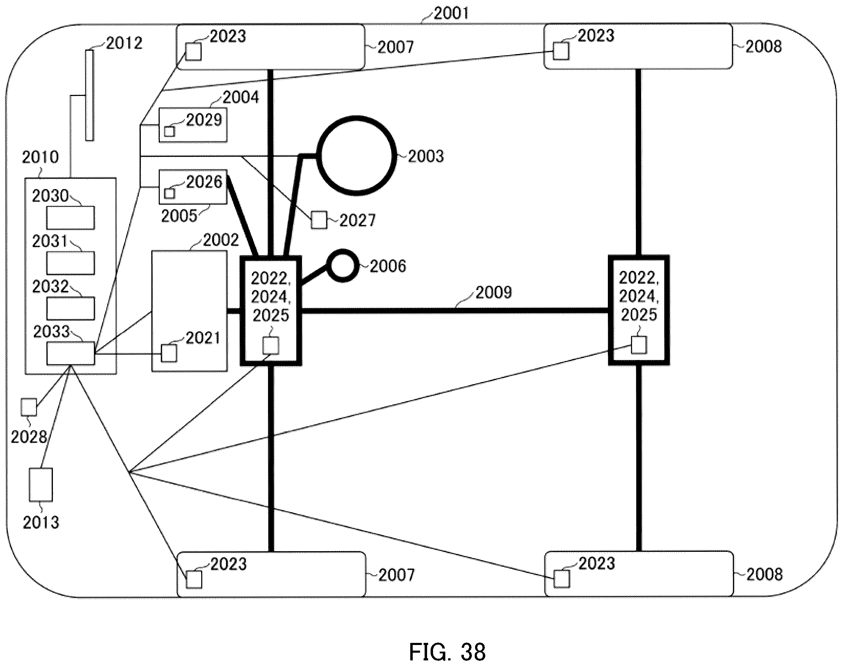

FIG. 38 illustrates an example of a configuration of vehicle 2001. As illustrated in FIG. 38, vehicle 2001 includes drive section 2002, steering section 2003, accelerator pedal 2004, brake pedal 2005, shift lever 2006, front wheel 2007, rear wheel 2008, axle 2009, electronic control section 2010, various sensors 2021 to 2029, information service section 2012, and communication module 2013. The aspects/embodiments described in the present disclosure may be applied to a communication device mounted in vehicle 2001, and may be applied to, for example, communication module 2013.

Drive section 2002 may include, for example, an engine, a motor, and a hybrid of an engine and a motor. Steering section 2003 includes at least a steering wheel and is configured to steer at least one of the front wheel or the rear wheel, based on the operation of the steering wheel operated by the user.

Electronic control section 2010 includes microprocessor 2031, memory (ROM, RAM) 2032, and communication port (IO port) 2033. Electronic control section 2010 receives signals from the various sensors 2021 to 2029 provided in vehicle 2001. Electronic control section 2010 may be referred to as an ECU (Electronic control unit).

Signals from various sensors 2021 to 2029 include a current signal from current sensor 2021 which senses the current of the motor, a front or rear wheel rotation signal acquired by revolution sensor 2022, a front or rear wheel pneumatic signal acquired by pneumatic sensor 2023, a vehicle speed signal acquired by vehicle speed sensor 2024, an acceleration signal acquired by acceleration sensor 2025, a stepped-on accelerator pedal signal acquired by accelerator pedal sensor 2029, a stepped-on brake pedal signal acquired by brake pedal sensor 2026, an operation signal of a shift lever acquired by shift lever sensor 2027, and a detection signal, acquired by object detection sensor 2028, for detecting an obstacle, a vehicle, a pedestrian, and the like.

Information service section 2012 includes various devices for providing (outputting) various kinds of information such as driving information, traffic information, and entertainment information, including a car navigation system, an audio system, a speaker, a television, and a radio, and one or more ECUs controlling these devices. The information service section 2012 provides various types of multimedia information and multimedia services to the occupants of the vehicle 2001 by using information obtained from the external device through the communication module 2013 or the like.

Information service section 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

Driving support system section 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, driving support system section 2030 transmits and receives various types of information via communication module 2013 to realize a driving support function or an autonomous driving function.

Communication module 2013 may communicate with microprocessor 2031 and components of vehicle 2001 via a communication port. For example, communication module 2013 transmits and receives data via communication port 2033, to and from drive section 2002, steering section 2003, accelerator pedal 2004, brake pedal 2005, shift lever 2006, front wheel 2007, rear wheel 2008, axle 2009, microprocessor 2031 and memory (ROM, RAM) 2032 in electronic control section 2010, and sensors 2021 to 29 provided in vehicle 2001.

Communication module 2013 is a communication device that can be controlled by microprocessor 2031 of electronic control section 2010 and that is capable of communicating with external devices. For example, various kinds of information are transmitted to and received from external devices through radio communication. Communication module 2013 may be internal to or external to electronic control section 2010. The external devices may include, for example, a base station, a mobile station, or the like.

Communication module 2013 may transmit at least one of signals from various sensors 2021 to 2029 described above input to electronic control section 2010, information obtained based on the signals, and information based on an input from the outside (a user) obtained via information service section 2012, to the external apparatus via radio communication. Electronic control section 2010, various sensors 2021 to 2029, information service section 2012, and the like may be referred to as input units that receive input. For example, the PUSCH transmitted by communication module 2013 may include information based on the input.

Communication module 2013 receives various types of information (traffic information, signal information, inter-vehicle information, etc.) transmitted from the external devices and displays the received information on information service section 2012 provided in vehicle 2001. Information service section 2012 may be referred to as an output unit that outputs information (for example, outputs information to devices, such as a display and a speaker, based on the PDSCH received by communication module 2013 (or data/information decoded from the PDSCH)).

In addition, communication module 2013 stores the various types of information received from the external devices in memory 2032 available to microprocessor 2031. Based on the information stored in memory 2032, microprocessor 2031 may control drive section 2002, steering section 2003, accelerator pedal 2004, brake pedal 2005, shift lever 2006, front wheel 2007, rear wheel 2008, axle 2009, and sensors 2021 to 2029 mounted in vehicle 2001.

### <Meaning and Interpretation of Terms>

As used herein, the term "determining" may encompass a wide variety of actions. For example, "determining" may be regarded as judging, calculating, computing, processing, deriving, investigating, looking up or search inquiry (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Also, "determining" may be replaced with "assuming," "expecting," "considering," and the like.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access." As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

### <Reference Signal>

A reference signal may be abbreviated as an "RS," and may be referred to as a "pilot" and so on, depending on which standard applies.

### <Meaning of "Based On">

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

### <"First" and "Second">

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

### <Means>

"Means" included in the configuration of each of the above apparatuses may be replaced by "parts," "circuits," "devices," etc.

### <Open Form>

In the case where the terms "include," "including" and variations thereof are used in the present disclosure, these terms are intended to be comprehensive in the same way as the term "comprising." Further, the term "or" used in the present specification is not intended to be an "exclusive or."

### <Time Units such as TTI, Frequency Units such as RB, and Radio Frame Configuration>

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a "Transmission Time Interval (TTI)," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP."

The above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

### <Maximum Transmit Power>

The "maximum transmit power" described in the present disclosure may mean a maximum value of the transmit power, the nominal UE maximum transmit power, or the rated UE maximum transmit power.

### <Article>

In the present disclosure, where an article is added by translation, for example "a," "an," and "the," the disclosure may include that the noun following these articles is plural.

### <"Different">

In this disclosure, the term "A and B are different" may mean "A and B are different from each other." It should be noted that the term "A and B are different" may mean "A and B are different from C." Terms such as "separated" or "combined" may be interpreted in the same way as the above-described "different."

### Industrial Applicability

An aspect of the present disclosure is useful for radio communication systems.

### Reference Signs List

10 Base station
20 Device
101, 202 Transmission section
102, 201 Reception section
103, 203 Control section

## Claims

1. A device having a lower complexity than a narrow band-internet of things (NB-IoT) device, the device comprising:
a communication section that receives a first signal; and
a control section that determines, based on a first timing or a first period at which the first signal is received, a second timing or a second period at which a second signal is received by the communication section.

2. The device according to claim 1, wherein,
the control section determines the second timing as a timing at which a specific time has elapsed from the first timing, a start timing of the first period, or an end timing of the first period.

3. The device according to claim 1, wherein,
the control section determines a start timing of the second period as a timing at which a specific time has elapsed from the first timing, a start timing of the first period, or an end timing of the first period.

4. The device according to claim 1, wherein,
the first signal is a signal for waking up the device or a signal including information for receiving the second signal.

5. The device according to claim 1, wherein,
the device:
monitors the second signal within the second period in a wake-up mode; and
transitions from the wake-up mode to a sleep mode after the second period in a case where the second signal is not received within the second period.

6. A communication method, comprising:
receiving a first signal by a device having a lower complexity than a narrow band-internet of things (NB-IoT) device; and
determining, by the device, based on a first timing or a first period at which the first signal is received, a second timing or a second period at which a second signal is received by the device.
